# EUROPÄISCHE PATENTSCHRIFT

(11) **EP 1 554 911 B1**
(45) Veröffentlichungstag und Bekanntmachung des Hinweises auf die Patenterteilung: **04.03.2009**
(21) Anmeldenummer: 03773563.6
(22) Anmeldetag: 22.10.2003
(51) Int. Cl.: H05B 3/34, B60N 2/56, B60N 2/00, B60N 3/04, B60R 21/01

(54) **FLÄCHENHEIZUNG, VERFAHREN ZU DEREN HERSTELLUNG UND HEIZBARER GEGENSTAND SOWIE SITZBELEGUNGSERKENNUNG, SITZ DAMIT UND SITZBELEGUNGSERKENNUNGSVERFAHREN**
PANEL HEATING SYSTEM, METHOD FOR PRODUCING THE SAME, HEATABLE OBJECT, SEAT OCCUPANCY RECOGNITION SYSTEM, SEAT PROVIDED WITH THE SAME AND SEAT OCCUPANCY RECOGNITION METHOD
SYSTEME DE CHAUFFAGE DE SURFACE, PROCEDE DE PRODUCTION DE CE SYSTEME ET OBJET CHAUFFANT, SYSTEME DE DETECTION D'OCCUPATION DE SIEGE, SIEGE EQUIPE D'UN TEL SYSTEME ET PROCEDE DE DETECTION D'OCCUPATION DE SIEGE

(30) Priorität: 23.10.2002 DE 20216362 U
(43) Veröffentlichungstag der Anmeldung: 20.07.2005
(73) Patentinhaber: BrainCOM AG, 81827 München (DE)
(72) Erfinder: DIEMER, Michael, S-55317 Jönköping (SE); DIEMER, Stephan, 67577 Alsheim (DE)
(74) Vertreter: Lindner, Manfred Klaus
(86) Internationale Anmeldenummer: PCT/DE2003/003515
(87) Internationale Veröffentlichungsnummer: WO 2004/040943

(56) Entgegenhaltungen:
- EP-A- 0 057 241
- WO-A-01/89267
- WO-A-91/11891
- WO-A-95/18517
- DE-A- 2 616 771
- DE-A- 3 524 631
- DE-U- 8 523 328
- GB-A- 1 246 343
- US-A- 4 526 952
- US-A- 6 093 910

## Beschreibung

Die Erfindung betrifft eine Flächenheizung nach dem Oberbegriff des Anspruchs 1 und einen heizbaren Gegenstand damit sowie ein Verfahren zum Herstellen einer Flächenheizung nach dem Oberbegriff des Anspruchs 6. Ferner betrifft die vorliegende Erfindung eine Sitzbelegungserkennung nach dem Oberbegriff des Anspruchs 8 sowie einen Sitz und ein Sitzbelegungserkennungsverfahren damit.

Insbesondere betrifft die vorliegende Erfindung im Rahmen der Flächenheizung eine Sitzheizung, einen beheizten Sitz sowie Verfahren zu deren Herstellung. Vorzugsweise betrifft die Erfindung außerdem eine Heizung für Seitenverkleidungen und Bodenbeläge insbesondere in Fahrzeugen, damit ausgestattete Seitenverkleidungen und Bodenbeläge insbesondere in Fahrzeugen sowie Verfahren zu deren Herstellung. Ferner betrifft die vorliegende Erfindung insbesondere eine Matratzenheizung, eine beheizte Matratze sowie Verfahren zu deren Herstellung.

Aus der Praxis sind beispielsweise für Kraftfahrzeuge Sitzheizungen bekannt, die die im Sinne der Erfindung eine Flächenheizung darstellen und durch stromdurchflossene metallische Leitungen als Heizdrähte gebildet sind, die zwischen Polsterschichten angeordnet sind. Dies erfordert nicht nur einen aufwendigen Aufbau eines entsprechend ausgestatteten Sitzes, sondern hat insbesondere im Betrieb Nachteile. So besteht wegen der stärkeren Aufheizung umgebender Schichten in unmittelbarer Nähe der Heizdrähte eine Gefahr von Überhitzung, die zu Schäden an den Polsterschichten und/oder den Heizdrähten führen und sogar einen Brand verursachen können. Ferner ist die Wärmeverteilung über die Fläche nicht optimal, da im Bereich der Heizdrähte die Temperatur immer höher ist, als in einem Abstand davon. Nachteilig bei dieser bekannten Bauweise ist ferner die mechanische Belastung, der die Heizdrähte ausgesetzt sind, wenn ein Insasse den Sitz benutzt, da dadurch die Leiterdrähte brechen können, was zum Funktionsversagen führen kann und/oder einen weiteren Brandherd zur Folge hat.

Aus der DT 26 16 771 A1 ist ein zusammengesetzter Heizkörper bekannt, der gerichtete Wärmestrahlung liefert und aus einem Kunststofflaminat unter Einarbeitung einer halbleitenden Schicht gebildet ist. Dieses Laminat besteht aus einer starren Kunststofflaminatstruktur, die aus wenigstens einer Schicht eines verstärkten Substratgrundmaterials und einem Harzüberzug auf diesem Material, einem halbleitenden kohlenstoffhaltigen Pyropolymer, das an einen hitzebeständigen anorganischen Oxidträger mit großer Oberfläche gebunden ist, welcher als eine Schicht auf wenigstens einer Seite der Schicht des Substratmaterials eingearbeitet ist, einer in einer Position auf einer Seite des Pyropolymers auf dem Substratmaterial eingearbeiteten wärmereflektierenden Schicht und Stromzufuhreinrichtungen zu voneinander beabstandeten Teilen der Schicht aus leitfähigem kohlenstoffhaltigen Pyropolymer gebildet ist und elektrische Widerstandsheizung in dem Laminat erzeugt, die durch die wärmereflektierende Schicht des zusammengesetzten Körpers reflektiert und abgestrahlt wird. Derartige Heizplatten sollen als Teil einer Wand eines Wohnraums oder Büros benützt werden.

Bei diesem Stand der Technik kann die Einbringung der halbleitenden Schicht in das Laminat dadurch erfolgen, dass fein zerteiltes kohlenstoffhaltiges Pyropolymer in der Form kleiner Teilchen oder als Pulver mit einem geeigneten Träger oder Vehikel derart vermischt wird, dass es auf der Oberfläche eines Harzbeschichteten Glastuches, von Papier, Filz, Karton und dergleichen als Laminatsubstrat oder auf einem Holzfurnier, das in der Laminatplatte verwendet wird, aufgestrichen, ausgebreitet oder anderweitig aufgebracht werden kann. Statt dessen kann das fein zerteilte kohlenstoffhaltige Pyropolymer auch mit dem Harz oder Polymermaterial vermischt werden, mit dem ein spezielles verstärkendes Grundmaterial imprägniert werden soll oder das auf dieses Grundmaterial als Überzug aufgebracht werden soll, wobei dieses Grundmaterial wenigstens eine Substratmaterialschicht des Laminats liefert. Das resultierende Gemisch wird in oder auf das Substrat durch Eintauchen oder Beschichten aufgebracht, und das resultierende überzogene Substrat wird einer Halbhärtung der Art unterzogen, dass das halbleitende Pyropolymer zu einer gleichmäßigen Imprägnierung und Beschichtung über dem resultierenden halbgehärteten Laminatbogen führt.

Die DE 33 16 182 A1 befasst sich mit der Verwendung von Formkörpern, wie Folien, Platten oder räumlich geformte Gebilde, aus der Klasse der Pyrrol-Polymerisaten, die mit Anionen komplexiert sind, als elektrische Heizelemente insbesondere zum Aufheizen von korrodierenden Flüssigkeiten oder Gasen. Dabei können die Formkörper noch mit organischen Kunststoffen überzogen sein.

Ein polymeres Verbundheizelement ist in der DE 35 24 631 A1 beschrieben und hat die Form eines Films, Rohrs oder Stabs. Derartige polymere Verbundheizelemente können als solche als Heizquellen verwendet oder mit herkömmlichen Kunststofffilmen laminiert werden, um die Materialstärke zu verbessern.

Die Verwendung elektrisch leitfähiger thermoplastischer Polyurethane sowie deren Herstellung sind aus der DE 33 21 516 A1 bekannt. Entsprechende Produkte eigenen sich u.a. zur Herstellung von 1 bis 2 mm dicken Folien für Flächenheizelemente.

Somit sind zwar grundsätzlich Heizeinrichtungen mit elektrisch leitfähigem Kunststoff bekannt, jedoch enthält der gesamte Stand der Technik keine Angaben oder Anregungen dazu, wie derartige Heizeinrichtungen ausgestattet und hergestellt sein müssen, um in der Praxis eingesetzt werden zu können.

In einer Reihe weiterer Publikationen der internationale Patentklassen H05B 3/36 und 3/84 sind an Beispielen von Außenspiegeln für Kraftfahrzeuge Flächenheizungen erläutert, die eine Schicht aus elektrisch leitenden Kunststoffen aufweisen. Im wesentlichen werden dabei Folien aus elektrisch leitenden Kunststoffen auf starren Trägern verwendet. Ein Einsatz einer Folie aus elektrisch leitenden Kunststoffen auf der Trägerstruktur eines Kraftfahrzeugsitzes ist jedoch nicht möglich, da dann die gesamten darüber liegenden Polsterschichten etc. geheizt werden müssten, bis die Wärme zu einem sitzenden Insassen käme, was sehr viel Energie verschlingen würde.

Speziell für Sitz- oder Liege-Unterlagen sind keine brauchbaren Flächenheizungen mit elektrisch leitenden Kunststoffen bekannt geworden. Für beispielsweise Kraftfahrzeugsitze oder Matratzen wären jedoch einfache, kostengünstige und betriebssichere Heizungen wünschenswert.

Aus der GB-A-1 246 343 ist eine Flächenheizung mit einem Träger und einer Heizschicht bekannt, die elektrisch leitfähigen Kunststoff enthält, wobei die Heizschicht durch einen flexiblen Film gebildet ist und der Träger flexibel ist.

Die WO 01/89267 A offenbart eine Sitzbelegungserkennung mit Elementen aus elektrisch leitfähigem Kunststoff.

Es ist ein Ziel der vorliegenden Erfindung, mit möglichst geringem Aufwand eine möglichst unaufwendige, betriebssichere und kostengünstige Flächenheizung mit einem elektrisch leitfähigen Kunststoff sowie einen Gegenstand damit zu schaffen.

Dieses Ziel wird mit einer Flächenheizung nach dem Anspruch 1, einem heizbaren Gegenstand nach dem Anspruch 4 und einem Verfahren zur Herstellung einer Flächenheizung nach dem Anspruch 6 erreicht.

Als besondere Vorteile werden mit der Erfindung eine gute, einfache und betriebssichere Bauart sowie eine gute Wärmeverteilung ermöglicht.

Erfindungsgemäß wird eine Flächenheizung mit einem Träger und einer Heizschicht geschaffen, die elektrisch leitfähigen Kunststoff enthält, wobei die Heizschicht durch einen flexiblen Film gebildet und der Träger flexibel ist, und wobei die Heizschicht eine Zusammensetzung gemäß dem kennzeichnenden Teil des Anspruchs 1 hat.

Eine solche Flächenheizung wird im Rahmen der vorliegenden Erfindung dadurch weitergebildet, dass der Träger eine Schicht, insbesondere ein Gewebe oder ein Vlies, vorzugsweise ein natürliches oder synthetisches Faservlies ist. Alternativ kann der Träger ein Formteil aus einem elastischen Material sein, wie beispielsweise ein Sitzpolster eines Sitzflächenteils oder einer Rückenlehne, oder eine Matratze.

Vorzugsweise enthält die Heizschicht Polyurethan, Einkomponenten-Polyurethan, vernetztes Einkomponenten-Polyurethan, einen PU-Schaum, UV-beständiges und/oder hydrolysefähiges oder dampfdurchlässiges Kunststoffmaterial. Jedoch sind auch andere elektrisch leitende oder leitfähige schäumende und Schaummaterialien verwendbar, wobei Kunststoffmaterialien bevorzugt sind. Alternativ oder zusätzlich ist es bevorzugt, dass der elektrisch leitfähige Kunststoff der Heizschicht Graphit, vorzugsweise in Pulverform enthält.

Bei der Flächenheizung kann weiter vorgesehen sein, dass Kontaktenden von Stromzuleitungsdrähten in der Heizschicht oder zwischen dem Träger und der Heizschicht mit letzterer in Kontakt sind. Bevorzugt sind dabei die Kontaktenden der Stromzuleitungsdrähte mittels der Heizschicht selbst an letzterer befestigt oder mit der Heizschicht und/oder dem Träger vernäht oder verklebt.

Weiterhin ist mit Vorzug vorgesehen, dass die Heizschicht durch Sprühen, Walzen oder Streichen auf dem Träger direkt gebildet ist. Alternativ kann die Heizschicht mit dem Träger verklebt, vernäht oder verschweißt oder anderweitig daran befestigt sein.

Mit Vorzug ist ferner eine manuell und/oder elektrisch/elektronisch betätigbare und/oder automatische Stromsteuerung vorgesehen, die mit einer Stromquelle verbindbar ist und an die Stromzuleitungsdrähte angeschlossen sind, deren Kontaktenden mit der Heizschicht in Kontakt sind.

Durch die Erfindung wird außerdem ein heizbarer Gegenstand geschaffen, der eine Flächenheizung gemäß den vorstehenden Ausgestaltungen enthält.

Im Rahmen einer vorzugsweisen Ausgestaltung ist der Gegenstand ein Sitzflächenteil oder eine Rückenlehne oder ein Polster eines Sitz- oder Liegemöbels, insbesondere eine Matratze, und ist die Heizschicht an Oberschenkel-Gesäß-Partien oder Rückenpartien eines Nutzers anatomisch angepasst. Letzteres wird vorteilhafterweise dadurch erreicht, dass die Heizschicht in der Ebene des Sitzflächenteils bzw. der Rückenlehne oder des Polsters eines Sitz- oder Liegemöbels, insbesondere eine Matratze, anatomisch geformt ist, indem sie nur gemäß anatomischen Vorgaben vorhanden oder elektrisch leitfähig ist. Alternativ oder zusätzlich kann die Heizschicht zur anatomisch angepassten Wärmeabgabe ein entsprechendes Dickenprofil aufweisen.

Eine andere vorzugsweise Ausgestaltung des heizbaren Gegenstandes besteht in einer gepolsterten Verkleidung insbesondere eines Fahrzeuges. Auch ein solcher heizbarer Gegenstand kann zu einer über seine Fläche unterschiedlichen Wärmeabgabe ausgelegt sein.

Allgemein kann ferner vorgesehen sein, dass die Heizschicht zur über ihre Fläche unterschiedlichen Wärmeabgabe in ihrer flächigen Ausbreitung und/oder in ihrer Dicke profiliert ist.

Schließlich schafft die vorliegende Erfindung noch ein Verfahren zur Herstellung einer Flächenheizung, wobei eine Heizschicht mit elektrisch leitfähigem Kunststoff mit einem Träger verbunden wird und im weiter eine der drei Varianten im kennzeichnenden Teil des Anspruchs 6 erfüllt..

Erfindungsgemäß wird beispielsweise die Heizschicht durch zunächst Auftragen eines elektrisch leitfähigen, insbesondere schäumenden oder Schaum-Kunststoffmaterials auf den Träger und dann Aushärten des Kunststoffmaterials auf dem Träger gebildet. Eine vorzugsweise Weiterbildung dieses Verfahrens besteht darin, dass vor dem Auftragen des elektrisch leitfähigen, insbesondere schäumenden oder Schaum-Kunststoffmaterials auf den Träger zunächst Kontaktenden von Stromzuleitungsdrähten auf der Seite des Trägers angeordnet werden, auf der dann das Kunststoffmaterial aufgetragen wird.

Alternativ ist bei einem erfindungsgemäßen Verfahren zur Herstellung einer Flächenheizung, wobei eine Heizschicht mit elektrisch leitfähigem Kunststoff mit einem Träger verbunden wird, vorgesehen, dass die Heizschicht aus einem elektrisch leitfähigen, insbesondere schäumenden oder Schaum-Kunststoffmaterial hergestellt und dann auf dem Träger angeordnet wird. Dabei kann vorzugsweise die Heizschicht nach dem Anordnen auf dem Träger mit letzterem verrutschsicher verbunden werden. Dies erfolgt bevorzugt dadurch, dass die Heizschicht mit dem Träger vernäht, verklebt oder verschweißt wird.

Mit Vorzug, jedoch ohne Beschränkung wird als Kunststoffmaterial elektrisch leitfähiges Polyurethan verwendet.

Das Verfahren kann dadurch weitergebildet werden, dass Kontaktenden von Stromzuleitungsdrähten an der Heizschicht und/oder dem Träger angebracht werden, so dass sie in dem Verbund von Träger und Heizschicht mit letzterer in Kontakt sind. Dazu werden vorzugsweise die Kontaktenden von Stromzuleitungsdrähten mit der Heizschicht und/oder dem Träger vernäht oder verklebt.

Eine andere Fortbildung des erfindungsgemäßen Verfahrens besteht darin, dass die Heizschicht bei oder nach ihrer Herstellung in ihrer Flächenform und/oder Dicke profiliert wird. Dies kann beim Herstellen der Heizschicht direkt auf dem Träger beispielsweise mittels Schablonen erfolgen, die die Flächenform der Heizschicht bestimmen. Wird die Heizschicht separat hergestellt, d.h. nicht direkt auf dem Träger, so kann ihre Form beispielsweise in formgebenden Rahmen oder durch Ausstanzen erhalten werden. Auch die Dicke kann über die Fläche der Heizschicht variiert werden.

Beispielsweise kann das elektrisch leitende Kunststoffmaterial der Heizschicht Kohlenstoff oder Kohlenstoffpartikel enthalten, um eine elektrische Leitfähigkeit bereitzustellen. Im übrigen ist das Material der Heizschicht derart, dass es bei oder nach einer Temperaturerhöhung in Folge der Heizwirkung zumindest im wesentlichen ausgehärtet und auch im übrigen formstabil und unbeschädigt bleibt. Polyurethan (PU) wird, wie bereits erwähnt, bevorzugt für den elektrisch leitfähigen Kunststoff verwendet, jedoch sind grundsätzlich auch alle anderen in dem eingangs angegebenen Stand der Technik offenbarten Materialien einsetzbar, soweit sie sich schäumen lassen. Weitere Materialangaben und technischer Hintergrund sind beispielsweise in den Veröffentlichungen DE G 85 23 328.5, DE 298 08 842 U1, DE 197 11 522 A1 und DE 691 01 703 T2 offenbart, deren Inhalte zur Vermeidung bloßer Wiedergabe hiermit durch Bezugnahme vollumfänglich in die vorliegenden Unterlagen aufgenommen sind.

Die vorliegende Erfindung betrifft auch eine Sitzbelegungserkennung, einen Sitz damit sowie ein Sitzbelegungserkennungsverfahren jeweils entsprechend den Ansprüchen 8, 10 und 11. Grundsätzlich sind Ausgestaltung, Materialien und Herstellungsverfahren für die Sitzbelegungserkennung in Übereinstimmung mit Ausgestaltung, Materialien und Herstellungsverfahren für die Flächenheizung.

Bevorzugte und vorteilhafte Weiterbildungen der hierin offenbarten Erfindung ergeben sich aus den abhängigen Ansprühen und deren angegebenen Kombinationen sowie dem gesamten Offenbarungsgehalt dieser Unterlagen unter Einbeziehung fachmännischen Wissens und des Standes der Technik, insbesondere soweit er in der Einleitung dieser Beschreibung angegeben ist.

Die Erfindung wird nachfolgend unter Bezugnahme auf Ausführungsbeispiele näher erläutert, die in den Zeichnungen dargestellt sind, in denen zeigen:
- Fig. 1 a und b: schematisch in einer geschnittenen bzw. perspektivischen teilweisen Ansicht ein erstes Ausführungsbeispiel der Erfindung in Verbindung mit einem Kraftfahrzeugsitz mit einer Sitzheizung,
- Fig. 2 a und b: schematisch in einer geschnittenen bzw. perspektivischen teilweisen Ansicht einen Kraftfahrzeugsitz mit einer Sitzheizung nach dem Stand der Technik,
- Fig. 3a, 3b und 3c: ein zweites und ein drittes Ausführungsbeispiel eine erfindungsgemäßen Flächenheizung schematisch in einer perspektivischen Übersichtsdarstellung bzw. je einer Schnittansicht in Verbindung mit einer Innenauskleidung eines Kraftfahrzeuges,
- Fig. 4a und 4b: schematisch eine Innenauskleidungsbezug eines Kraftfahrzeuges als viertes Ausführungsbeispiel einer Flächenheizung in einer perspektivischen Übersichtsdarstellung bzw. einer Schnittansicht,
- Fig. 5a und 5b: schematisch ein fünftes Ausführungsbeispiel eines Gegenstandes mit einer Flächenheizung in einer perspektivischen Übersichtsdarstellung bzw. einer Schnittansicht in Form eines Bodenbelages eines Kraftfahrzeuges,
- Fig. 6: schematisch als sechstes Ausführungsbeispiel der Erfindung in einer perspektivischen teilweisen Ansicht einen Kraftfahrzeugsitz mit einer Sitzheizung,
- Fig. 7: noch ein weiteres Ausführungsbeispiel für eine erfindungsgemäße Heizung in einem schematischen Querschnitt, und
- Fig. 8: schematisch ein Ausführungsbeispiel für eine Sitzbelegungserkennung gemäß der vorliegenden Erfindung.

Bei der nachfolgenden Beschreibung der Erfindung anhand von Ausführungsbeispielen werden für gleiche oder gleichwirkende Teile durchgehend dieselben Bezugszeichen verwendet. Auch wenn nicht sämtliche Einzelheiten der graphischen Darstellungen in der nachfolgenden Beschreibung behandelt werden, ergeben sich die einzelnen Merkmale und deren Zusammenhänge, soweit sie in den Figuren dargestellt sind, für einen Fachmann ohne weiteres aus den Abbildungen selbst.

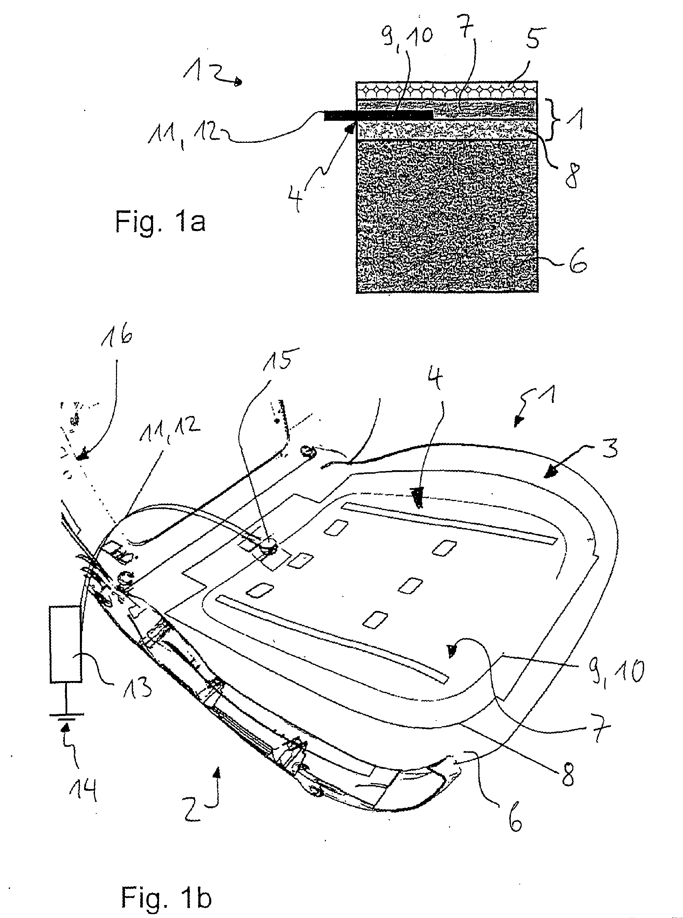

Als erstes Ausführungsbeispiel einer Flächenheizung 1 ist in den Fig. 1a und 1b in einer geschnittenen bzw. perspektivischen Schemazeichnung ein Kraftfahrzeugsitz 2 gezeigt, in dessen Sitzflächenteil 3 eine Sitzheizung 4 integriert ist.

Der Aufbau des Sitzflächenteils 3 in der Umgebung der Flächenheizung 1 ist in der Fig. 1a gezeigt, in der ein Querschnittsausschnitt durch die entsprechenden Schichten/Komponenten des Sitzflächenteils 3 dargestellt ist. Die Oberfläche des Sitzflächenteils 3 wird von einem Sitzbezug 5 gebildet, der aus Stoff, Kunstleder oder Leder oder anderen geeigneten Materialien oder Kombinationen daraus bestehen kann. Die Form des Sitzflächenteils 3 wird zumindest im wesentlichen durch einen elastischen Schaumstoff-Formkörper 6 gebildet. Zwischen dem elastischen Schaumstoff Formkörper 6 und dem Sitzbezug 5 sind die Komponenten der Sitzheizung 4 angeordnet.

Die Sitzheizung 4 ist durch die Flächenheizung 1 gebildet, die eine Heizschicht 7 und einen Träger 8 enthält. Der Träger 8 ist eine flexible Schicht aus einem Faservlies mit natürlichen und/oder synthetischen Fasern. Die Heizschicht 7 besteht aus einem flexiblen, elektrisch leitenden Kunststoffschaum, wie beispielsweise elektrisch leitfähiges Polyurethan, woraus ein Film oder eine Folie gebildet ist, so dass sich eine Oberflächenhaut ergibt. Der Film weist keine erkennbaren Poren auf, kann aber auch in seiner Mikrostruktur geschlossenzellig oder -porig sein. Insbesondere ist das Material UV-beständig und/oder hydrolysefähig oder dampfdurchlässig, um gemäß der bevorzugtesten Anwendung bei einem Sitz- oder Liegepolster Verwendung zu finden. Dadurch ist eine optimale Klimatisierung durch die Unterlage hindurch für den Nutzer sichergestellt.

Das Material zur Bildung des Films, wie z.B. UV-beständiges und hydrolysefähiges oder dampfdurchlässiges, vernetztes Einkomponenten-Polyurethan, wird beispielsweise durch Sprühen auf das Faservlies aufgebracht, so dass ein sogenannter Sprühflush oder eine Sprühhaut durch dieses sogenannte Sprühflush-Verfahren gebildet wird. Alternativ könnte der Film auch auf dem Sitzbezug 5 oder dem elastischen Schaumstoff-Formkörper 6 durch dieses Verfahren gebildet werden. Das Material könnte auch in die Schäumform für den elastischen Schaumstoff-Formkörper 6 vor dem Einbringen des Schaummaterials dafür eingesprüht werden, um sich mit letzterem bei dessen Aushärtung zu verbinden. Bei einer Herstellung des Films durch Sprühen kann z.B. durch die Sprühdauer die Dicke des Films sehr genau eingestellt und ggf. über seinen Verlauf variiert werden. Alternativ kann der Film auch durch Walzen oder Streichen des entsprechenden Materials insbesondere auf den Träger 7, aber auch separat hergestellt und dann ggf. mit dem Träger 7, dem Sitzbezug 5 oder dem elastischen Schaumstoff-Formkörper 6 verbunden werden.

Zwischen die Heizschicht 7 und den Träger 8 sind am Rand der Heizschicht 7 Kontaktenden 9 und 10 von Stromzuleitungsdrähten 11 bzw. 12 so eingelegt, dass sie in elektrisch leitendem Kontakt mit der Heizschicht 7 sind (vergleiche auch Fig. 1b).

Zur Herstellung der Flächenheizung 1 des ersten Ausführungsbeispiels wird noch fließfähiges oder flüssiges elektrisch leitendes Polyurethanmaterial, das beispielsweise Kohlenstoffpartikel enthält, wie bereits weiter oben erläutert, durch Walzen, Streichen oder Sprühen auf das Faservlies des Trägers 8 aufgetragen, nachdem die Kontaktenden 9 und 10 der Stromzuleitungsdrähte 11 bzw. 12 geeignet auf dem Faservlies des Trägers 8 platziert wurden. Nach dem Aushärten des elektrisch leitenden Polyurethanschaums ist dieser flexibel und in elektrisch leitendem Kontakt mit den Kontaktenden 9 und 10 der Stromzuleitungsdrähte 11 bzw. 12 und bildet die Heizschicht 7. Die Kontaktenden 9 und 10 der Stromzuleitungsdrähte 11 bzw. 12 können alleine schon durch die Verbundkräfte zwischen dem Polyurethanschaum und dem Faservlies festgehalten werden. Zur weiteren Sicherung der Fixierung können die Kontaktenden 9 und 10 der Stromzuleitungsdrähte 11 bzw. 12 noch mit dem Verbund vernäht werden (nicht gezeigt). Bei dieser Variante stellt die elektrisch leitfähige PU-Lage der Heizschicht 7 gleichzeitig auch eine Haft- oder Klebeschicht dar.

Statt die Heizschicht 7 direkt auf dem Faservlies des Trägers 8 auszubilden, kann die Heizschicht 7 auch gesondert ausgebildet werden und im ausgehärteten, aber flexiblen Zustand mit dem Träger 8 zusammengeführt werden. Die Fixierung zwischen der Heizschicht 7 und dem Träger 8 erfolgt beispielsweise durch Kleben, Nähen oder Schweißen, je nachdem, welche Verarbeitung sich in Abhängigkeit von den verwendeten Materialien durchführen lässt. Die Kontaktenden 9 und 10 der Stromzuleitungsdrähte 11 bzw. 12 müssen nicht zwingend zwischen dem Träger 8 und der Heizschicht 7 liegen, sondern können auch auf der dem Träger 8 abgewandten Seite der Heizschicht 7 mit letzterer zusammengebracht werden, um einen elektrisch leitenden Kontakt zu erhalten.

Das Faservlies des Trägers 8 kann auch zunächst ein Bandmaterial sein, auf dem vollflächig oder entsprechend der für das Sitzflächenteil 3 erforderlichen Geometrie geformt die Heizschicht 7 gebildet wird oder darauf die vorgefertigte Heizschicht 7 auch als Bandmaterial oder als entsprechend der für das Sitzflächenteil 3 erforderlichen Geometrie geformte Teile aufgelegt und damit verbunden wird. Danach können die gewünschten Einzelstücke entsprechend der für das Sitzflächenteil 3 erforderlichen Geometrie beispielsweise durch Ausstanzen hergestellt werden. Es ist aber auch möglich, das Faservlies zunächst in der für das Sitzflächenteil 3 erforderlichen Geometrie herzustellen und darauf die Heizschicht 7 zu bilden, die auch schon vorher entsprechend der für das Sitzflächenteil 3 erforderlichen Geometrie vorgefertigt sein kann. Die Kontaktenden 9 und 10 der Stromzuleitungsdrähte 11 bzw. 12 können beim Herstellen des Verbundes aus Träger 8 und Heizschicht 7 jeweils entsprechend geeignet zwischengelegt oder an dem zumindest zusammengefügten Verbund zur geeigneten Befestigung angeordnet werden.

In der Fig. 1b ist in einer schematischen perspektivischen Ansicht das erste Ausführungsbeispiel der Flächenheizung 1 unter Weglassung des Sitzbezuges 5 weiter veranschaulicht. Dabei ist auch der Verlauf der Kontaktenden 9 und 10 der Stromzuleitungsdrähte 11 bzw. 12 gut erkennbar. Weiterhin sind eine Stromsteuerung 13 und eine Stromquelle 14 zur Steuerung bzw. zum Betrieb der Flächenheizung 1 schematisch gezeigt. Die Stromsteuerung 13 kann manuell und/oder elektrisch/elektronisch betätigbar und/oder automatisch sein. In der Praxis handelt es sich bei der Stromsteuerung 13 um die übliche Steuerung der Temperierung des Fahrzeuginnenraums oder einen Teil davon, oder um eine gesonderte Steuerung. Die Stromzuleitungsdrähte 11 und 12 sind an die Stromsteuerung 13 angeschlossen und enden quasi in ihren Kontaktenden 9 bzw. 10. Vor den Kontaktenden 9 und 10 kann beispielsweise noch eine Funktionseinheit 15 an den Stromzuleitungsdrähten 11 und 12 vorgesehen sein, die z.B. einen gesonderten Sitzbelegungssensor, einen Wärmesensor oder Temperaturfühler, einen Verteiler u.v.m. beinhalten kann.

Der Träger 8 könnte statt aus einem Faservlies auch durch andere Materialien und Strukturen, wie beispielsweise aus einem Gewebe gebildet sein. Der Träger 8 könnte aber auch ein Formteil sein, wie etwa der elastische Schaumstoff-Formkörper 6 des ersten Ausführungsbeispiels gemäß den Fig. 1a und 1b selbst.

Geeignete Materialien für die Heizschicht, d.h. das elektrisch leitfähige Schaummaterial, sind in den vorliegenden Unterlagen insbesondere hinsichtlich ihrer physikalischen Eigenschaften spezifiziert und im übrigen der Fachwelt gut bekannt und beispielsweise auch in dem Stand der Technik angegeben, der in den vorliegenden Unterlagen zitiert ist, so dass darauf nicht näher eingegangen werden braucht, sondern hiermit durch Bezugnahme sämtliche geeigneten Materialien insbesondere aus den in den vorliegenden Unterlagen zitierten oder angegebenen älteren Veröffentlichungen hierin aufgenommen sind.

Obwohl es vorstehend nicht erläutert und auch in der Fig. 1b nicht gezeigt ist, kann auch die in der Fig. 1b nur teilweise sichtbare Rückenlehne 16 mit einer Flächenheizung 1 ausgestattet sein. Ferner können ohne Beschränkung sämtliche ähnliche Gegenstände, wie insbesondere Matratzen oder andere Polster mit einer erfindungsgemäßen Flächenheizung 1 ausgestattet sein. Bevorzugt ist ferner eine Anwendung der Erfindung bei Seitenverkleidungen und Bodenbelägen insbesondere in Kraftfahrzeugen.

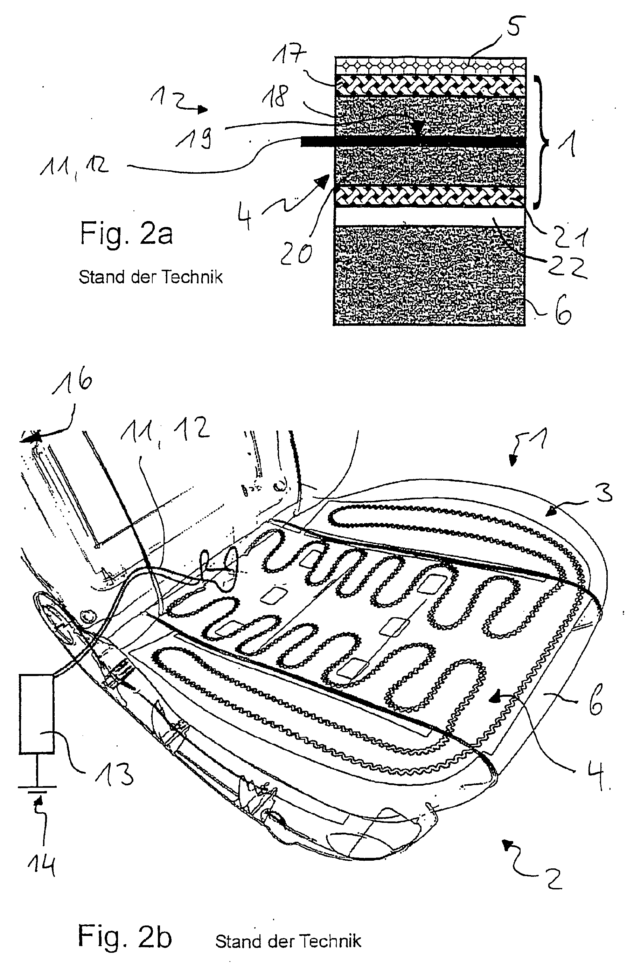

Lediglich zur Veranschaulichung der Unterschiede der vorliegenden Erfindung zum Stand der Technik zeigen die Fig. 2a und 2b Darstellungen analog zu den Fig. 1a bzw. 1b. Diese vorbekannte Flächenheizung 1 in Form einer Sitzheizung 4 für einen Kraftfahrzeugsitz 2 weist in üblicher Weise den Sitzbezug 5 und einen elastischen Schaumstoff-Formkörper 6 auf, zwischen denen die Flächenheizung 1 liegt.

Beim Stand der Technik enthält die Flächenheizung 1, wie die Fig. 2a verdeutlicht, vom Sitzbezug 5 her betrachtet der Reihe nach eine obere Gewebeschicht 17, eine obere Schaumstoffschicht 18, eine Heizdrahtlage 19, eine untere Schaumstoffschicht 20 und eine untere Gewebeschicht 21, die als vorgefertigter Verbund mittels eines beidseitig klebenden Klebebandes 22 mit dem das eigentliche Sitzkissen bildenden Schaumstoff-Formkörper 6 zumindest rutschfest verbunden sind.

Bei der Herstellung dieser Flächenheizung nach dem Stand der Technik werden die Gewebeschichten 17 und 21 zunächst jeweils in einem Flammkaschierverfahren mit den unmittelbar benachbarten Schaumstoffschichten 18 bzw. 20 verbunden.

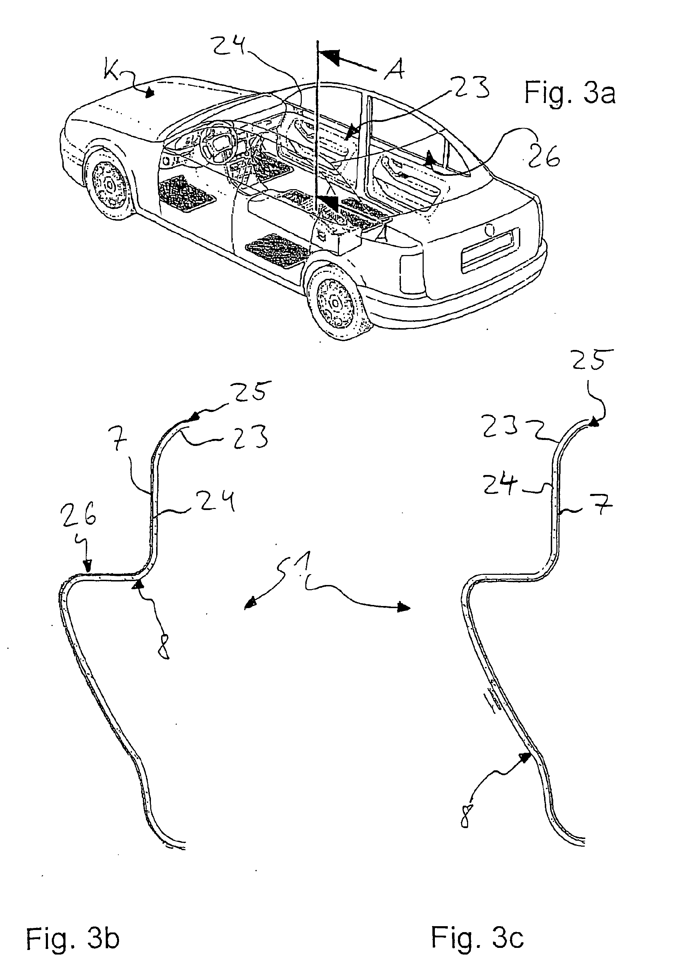

In den Fig. 3a, 3b und 3c, 4a und 4b sowie 5a und 5b sind weiter Ausführungsbeispiele von Heizeinrichtungen bei Kraftfahrzeugen dargestellt.

In der Fig. 3a ist ein Kraftfahrzeug K in einer Risszeichnung dargestellt, in der schematisch eine Schnittebene A durch eine Innenverkleidung 23 einer Fahrzeugtür 24 gezeigt ist. Die schematische Schnittansicht der Innenverkleidung 23 in der Schnittebene A gemäß den in der Fig. 3a gezeigten Pfeilen ist als zweites Ausführungsbeispiel eines heizbaren Gegenstandes mit einer Flächenheizung 2 in der Fig. 3b gezeigt. Diese Innenverkleidung 23 enthält als Träger 8 eine Trägerschicht 24, auf die die Heizschicht 7 mit elektrisch leitfähigem Kunststoff mittels Haftmittel 25 aufgebracht ist. Da die sichtbare Oberfläche der Innenverkleidung 23 durch die Heizschicht 7 mit elektrisch leitfähigem Kunststoff gebildet ist, kann die freie Sichtseite 26 der Heizschicht 7 mit elektrisch leitfähigem Kunststoff mit einem Dekor (nicht sichtbar), z.B. einem kunstlederähnlichen Aussehen, versehen sein, um ein angenehmes Äußeres der Innenverkleidung 23 zu erreichen.

Alternativ zum vorstehend beschriebenen Ausführungsbeispiel kann bei einer Variante davon, die in der Fig. 3c in einer Schnittansicht gezeigt ist, die Heizschicht 7 mit elektrisch leitfähigem Kunststoff mittels des Haftmittels 25 auf der dem Innenraum 26 des Kraftfahrzeugs K abgewandten Seite der Trägerschicht 24 angebracht sein. In einem solchen Fall kann entweder die Trägerschicht 24 selbst auf ihrer Sichtseite mit einem Dekor (nicht sichtbar) versehen sein, oder ein Dekor 27 (der besseren Übersichtlichkeit halber nur teilweise angedeutet) kann auf die Sichtseite der Trägerschicht 24 aufgebracht sein.

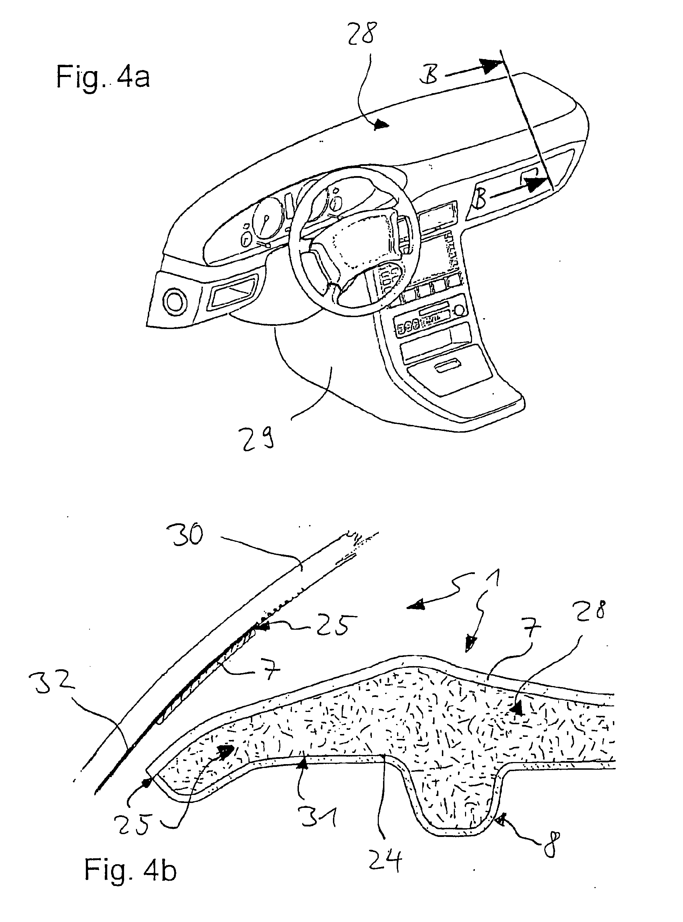

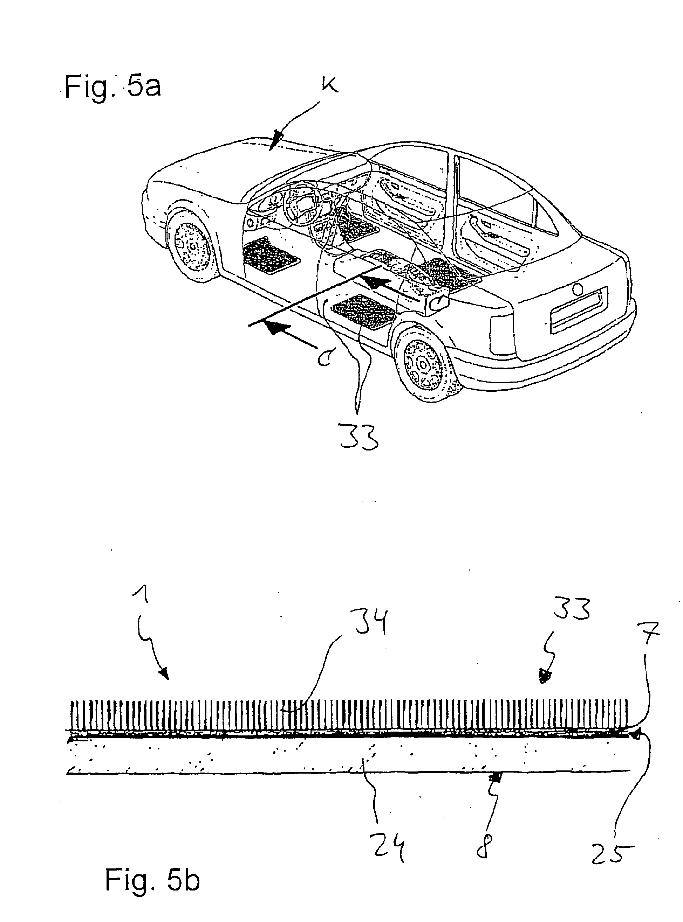

Das Prinzip der beiden eben beschriebenen Ausführungsbeispiele lässt sich auf den gesamten Fahrgastraum 26 des Kraftfahrzeugs K übertragen, insbesondere in soweit, als die entsprechenden Teile gepolstert sind. Z.B. können Fahrzeugsitze zur Realisierung oder Unterstützung einer Sitzheizung, eine Formhimmelverkleidung, eine Hutablage, Säulenverkleidungen, Konsolen, ein Lenkrad, Teppichmaterial, Luftkanäle insbesondere innen zum vorzugsweisen Vorwärmen kalter Luft u.v.a.m. als heizbare Gegenstände mit Heizeinrichtungen, die eine Heizschicht 7 mit elektrisch leitendem Kunststoff enthalten, zur Verbesserung des Raumklimas in einem Kraftfahrzeug eingesetzt werden. Dadurch ist es nicht nur möglich, die konventionellen Heizanlagen kleiner auszulegen, sondern es kann auch eine schnellere und gleichmäßiger verteilte oder gezielte Erwärmung des gesamten Innenraums 26 eines Kraftfahrzeugs K erreicht werden. Weitere konkrete Ausführungsbeispiele hierfür sind in den Fig. 4a und 4b sowie 5a und 5b verdeutlicht.

Die Fig. 4a zeigt an einer perspektivischen Ansicht einer Armaturentafel 28 und einer Konsole 29 die Lage einer Schnittebene B, wobei die Blickrichtung auf die Schnittebene gemäß der Darstellung in der Fig. 4b durch Pfeile veranschaulicht ist. Die Fig. 4b ist die Schnittansicht durch das Armaturenbrett 28 in der Schnittebene B, wobei auch ein Teil einer benachbarten Windschutzscheibe 30 des entsprechend ausgerüsteten Kraftfahrzeuges K im Schnitt gezeigt ist. Die Heizschicht 7 mit elektrisch leitfähigem Kunststoff bildet die Kunststoffhaut, mit der die Armaturentafel 28 bezogen ist und die die Oberfläche der letzteren bildet. Mittels eines Haftmittels 25, das im vorliegenden vierten Ausführungsbeispiel durch eine Füllmasse, wie Schaumstoff etc., gebildet ist, ist die Heizschicht 7 mit elektrisch leitfähigem Kunststoff mit einer als Halter 31 dienenden Trägerschicht 24 als Träger 8 verbunden. Die Heizschicht 7 mit elektrisch leitfähigem Kunststoff bildet dabei eine Formhaut mit eingelagertem leitfähigem Material. Alternativ könnte bei diesem Ausführungsbeispiel etwa analog zur Variante, die in der Fig. 3c gezeigt ist, die Heizschicht 7 mit elektrisch leitfähigem Kunststoff noch mit einer Dekorschicht (nicht gezeigt) überzogen sein.

In der Fig. 4b ist als weiteres Ausführungsbeispiel eines Gegenstandes mit einer Flächenheizung 1 eine Windschutzscheibe 30 im Schnitt teilweise gezeigt. Diese Windschutzscheibe 30 ist im Bereich ihres Umfangs mit einer schwarzen Keramikschicht 32 versehen, die beispielsweise durch Siebdruck aufgebracht sein kann. Weiterhin ist vorgesehen, dass im Bereich der Keramikschicht 32 eine Heizschicht 7 mit elektrisch leitfähigem Kunststoff direkt oder mittels einesHaftmittels 25, wie beispielsweise Kleber, an der Windschutzscheibe 30 angebracht ist. Durch diese Ausgestaltung kann z.B. eine umlaufende zusätzliche und/oder gesonderte Heizung der Windschutzscheibe 30 zur Beschlagsverhinderung, Beschlagsentfernung oder Enteisung realisiert werden. Außerdem kann eine derartige Flächenheizung 1 insbesondere im Bereich der Ruheposition von Scheibenwischerblättern (nicht gezeigt) vorgesehen sein, um hier eine zusätzliche und/oder gesonderte Erwärmung der Windschutzscheibe 30 zu realisieren, so dass eine Beschädigung festgefrorener Scheibenwischblätter (nicht gezeigt) bei Betätigung des Scheibenwischers (nicht gezeigt) vermieden werden kann.

Besteht die Heizschicht 7 mit elektrisch leitfähigem Kunststoff aus durchsichtigem Material, so kann auch ein Durchsichtsbereich einer Scheibe, wie z.B. einer Windschutzscheibe 30, mit einer entsprechenden Flächenheizung 1 versehen werden. Dadurch kann ebenfalls ein Beschlagen einer derart ausgestatteten Scheibe entfernt oder vermieden werden und auch eine Vereisung abgetaut werden. Die bisher beispielsweise bei Heckscheiben (nicht gezeigt) verwendeten Heizleiter könnten dann entfallen oder kleiner dimensioniert werden.

Als weitere Variante zur Innenraumbeheizung eines Kraftfahrzeugs K ist in den Fig. 5a und 5b die Gestaltung von Teppichmaterial 33 mit einer Flächenheizung 1 verdeutlicht. Bei diesem sechsten Ausführungsbeispiel, das in der Fig. 5b in einer teilweisen Schnittansicht verdeutlicht ist, die gemäß Pfeilrichtung auf eine Schnittebene C in der Abbildung der Fig. 5a zu sehen ist, ist der Aufbau eines solchen Teppichmaterials 33 gezeigt. Dabei ist die Heizschicht 7 mit elektrisch leitfähigem Kunststoff mittels des Haftmittels 25 mit einer unteren Trägerschicht 24 als Träger 8 verbunden.

Die Borsten, Schlingen oder allgemein Fasern/Fäden 34, die die Oberseite des Teppichmaterials 33 bilden, können dabei entweder an der Trägerschicht 24 befestigt sein und durch die Heizschicht 7 mit elektrisch leitfähigem Kunststoff hindurchgehen, können direkt nur an der Schicht mit elektrisch leitfähigem Kunststoff angebracht sein, oder können von einer gesonderten Lage (nicht gezeigt) ausgehen, die mittels Haftmittel 25 mit der Heizschicht 7 mit elektrisch leitfähigem Kunststoff verbunden ist. Im letzteren Fall kann die Trägerschicht 24 auch weggelassen werden und der Träger 8 durch eine solche gesonderte Lage (nicht gezeigt) gebildet sein.

Im Rahmen der vorliegenden Erfindung liegt es auch, wenn die Heizschicht 7 mit elektrisch leitfähigem Kunststoff direkt durch die Trägerschicht 24 gebildet ist, oder wenn die Heizschicht 7 mit elektrisch leitfähigem Kunststoff mittels der Borsten, Schlingen, Fasern oder Fäden 34, die die Oberseite des Teppichmaterials 33 bilden, an der Trägerschicht 24 befestigt ist. Weiterhin ist es möglich, die Heizschicht 7 mit elektrisch leitfähigem Kunststoff unter Verwendung eines Haftmittels 25 an der Unterseite der Trägerschicht 24 anzubringen, so dass herkömmliches Teppichmaterial 33 weiterhin in gewohnter Weise gefertigt und nachträglich mit der Flächenheizung 1 versehen werden kann. Es ist ferner möglich bereits vorhandenes Teppichmaterial 33 entsprechend mit einer Flächenheizung 1 nachzurüsten.

Wie bereits erwähnt, ist es durch Anschluss der Heizschicht 7 mit dem elektrisch leitfähigen Kunststoffmaterial an eine Stromquelle (nicht gezeigt) möglich, einen gewünschten Heiz-oder Wärmeeffekt bei den entsprechenden beheizten Gegenständen zu erreichen. Da der elektrische Widerstand der Heizschicht 7 konstant ist, kann über die zugeführte elektrische Leistung die Heiztemperatur bestimmt oder geregelt werden. In vorteilhafter Weise besteht dabei die Möglichkeit, sowohl Gleichstrom, als auch Wechselstrom zu verwenden, insbesondere ohne dass Elektrosmog entsteht. Da es sich bei der derart erzeugten Wärme ferner ausschließlich um Strahlungswärme handelt, entsteht ein gewisser Temperatur- und Heizkomfort.

Bei Einsatz von natürlichen Rohstoffen, wie z.B. Holzfaser, Sisal, Material aus Bananenstauden, Kokosfasern, etc., stellen oft eine Geruchsbildung bei feuchtem Wetter sowie bakterieller Befall große Probleme dar. Wenn, wie bei den vorbeschriebenen Ausführungsbeispielen, Innenverkleidungsteile heizbar ausgelegt werden, kann in Kombinationswirkung zum reinen Erwärmungseffekt zusätzlich eine Vermeidung einer solchen Geruchsbildung und eines Bakterienbefalls erreicht werden.

Weitere konkrete Beispiele für beheizbare Gegenstände mit einer Flächenheizung 1 nach der vorliegenden Erfindung sind beispielsweise ein Dieseltank aus Kunststoff, womit eine Versulzung von Dieselkraftstoff bei niedrigen Außentemperaturen verhindert werden kann, indem eine Mindesttemperatur aufrecht erhalten werden kann, eine Ölwanne, durch deren Beheizung Motoröl zum besseren und effizienteren Betrieb des Motors vorgewärmt werden kann, ein ganzer Motorraum, der eine Vorwärmung des Motors ermöglicht, sowie beispielsweise auch ein Laderaum jeweils sowohl in Personenkraftwägen als auch von Lastkraftwägen. Damit können Flächenheizungen 1 mit Vorteil im Fahrzeuginnenraum und im Fahrzeugaußenbereich eingesetzt werden.

Die vorliegende Erfindung ist jedoch nicht auf einen Einsatz im Bereich von Kraftfahrzeugen beschränkt. Sämtliche vorgenannten Ausführungsbeispiele und Varianten sowie analogen Anwendungen können beispielsweise auch bei anderen Fahrzeugen bei Zweirädern, im Eisenbahnbereich, bei Schiffen und Flugzeugen angewandt werden.

Wie bereits erwähnt, sind zahlreiche weitere Anwendungsgebiete der vorliegenden Erfindung möglich, so können z.B. bei Motorrädern und Mopeds u.ä. Sitzbänke und Bedienelemente mit entsprechenden Flächenheizungen ausgestattet werden. Weitere Anwendungsmöglichkeiten bestehen beispielsweise im Haushalt (Beschichtung von Kunststofftapeten, Holzdecken, Holzfußböden, Teppichen, Fliesen, Ummantelungen von Heizungs- und Wasserrohren, Fußbodenheizungen), bei Kleidung u.ä. (Schuhe, Stiefel, Skistiefel, Arbeitskleidung, Schutzkleidung, Handschuhe, Heizdecken, Wärmedecken beispielsweise im Klinikbereich, Wärmebehälter), in Sport und Freizeit (Kunstrasensportplätze, Zeltunterböden, Schlafauflagen im Zelt) sowie beim Militär (u.a. Vorheizung im Fahrzeug zum besseren Anspringen des Motors im Winter).

Lediglich als bevorzugte elektrisch leitfähige oder elektrisch leitfähig machbare Kunststoffmaterialien werden hier insbesondere aliphatische und aromatische Polyurethane genannt.

Hinsichtlich der Herstellung einer erfindungsgemäßen Flächenheizung oder eines Gegenstandes damit ist es bevorzugt, wenn die Schicht mit oder aus elektrisch leitfähigem Kunststoff im Sprüh- oder Tauchverfahren oder durch Walzenauftrag hergestellt wird. Eine entsprechende Beschichtung ist vorzugsweise bei einem Verfahren zum Herstellen einer Heizeinrichtung oder eines Gegenstandes damit vorgesehen. Die Erfindung ermöglicht dadurch insbesondere auch eine Anpassung oder Auswahl des Beschichtungsverfahrens hinsichtlich der Geometrie der zu beschichtenden Form und/oder der zu produzierenden Stückzahl.

Bei den vorstehend behandelten exemplarischen und vergleichbaren Ausführungen beträgt die Schichtdicke der elektrisch leitenden Schicht vorzugsweise zwischen etwa 0,05 mm und ungefähr 0,3 mm. Wenn die elektrisch leitende Schicht auch als sichtbare Oberfläche eine Funktion erfüllen soll, ist es bevorzugt, wenn die Stärke dicker ist. Insbesondere liegt es auch im Umfang der vorliegenden Erfindung, die Schichtdicke in Abhängigkeit von der Anforderung oder dem Anforderungsprofil an die bzw. der Flächenheizung oder den bzw. des Gegenstand(es) anzupassen, was durch Überlegungen oder Versuche leicht herausgefunden werden kann. Beispielsweise wird eine Schichtdicke von 1,2 mm vorgesehen, wenn es sich um eine Oberflächenschicht mit zusätzlicher Funktion handelt, wie z.B. einer Fahrzeuginnenverkleidung.

Wie bereits angegeben, sind besonders bevorzugte Spezifikationen für das Kunststoffmaterial der Heizschicht 7, dass es Polyurethan enthält oder daraus besteht, und zwar bevorzugt vernetztes und/oder Einkomponenten-Polyurethan, das insbesondere UV-beständig und hydrolysefähig oder dampfdurchlässig ist.

Als eine besondere Spezialität der vorliegenden Erfindung ist eine Variante anzusehen, bei der gleichzeitig zur Sitzheizung mit der Anordnung der Flächenheizung 1 eine insbesondere gewichtsabhängige Sitzbelegungserkennung realisiert ist. Derartige Sitzbelegungserkennungen müssen heutzutage gesondert realisiert werden, um beispielsweise eine Airbagauslösung im Falle eines Unfalls nur dann durchzuführen, wenn auf einem entsprechenden Sitz aus ein Insasse sitzt. Durch die kombinierte Realisierung der Flächenheizung 1 nach der vorliegenden Erfindung mit der gleichzeitigen Funktion einer Sitzbelegungserkennung, die dazu auch noch gewichtsabhängige Informationen liefern kann, um eventuell Art und Heftigkeit einer Airbagauslösung dementsprechend zu steuern, wird nicht nur Bauaufwand, sondern auch Volumen und Gewicht im bzw. am Fahrzeug gespart, und zwar an Stellen, wo es für Stabilität und Sicherheit des Fahrzeuges nicht erforderlich ist.

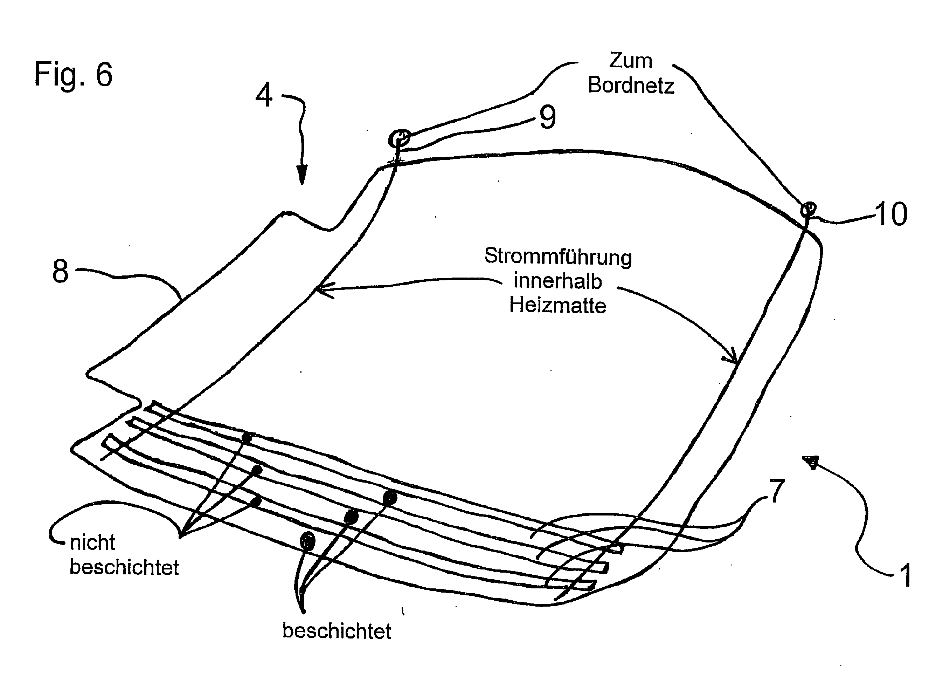

Die Flächenheizung 1 enthält insbesondere eine gestreifte Heizschicht 7 mit elektrisch leitfähigem Kunststoff, wie beispielsweise in der Fig. 6 schematisch veranschaulicht ist. Im übrigen sind sämtliche Merkmale gemäß der Gestaltung nach den Fig. 1a und 1b mit dem vorliegenden Ausführungsbeispiel kombinierbar und für jeden Fachmann verständlich, so dass auf entsprechende Beschreibungen hier verzichtet wird.

Zwar in der Zeichnung nicht gesondert dargestellt, aber dennoch eine wesentliche Anwendung der vorliegenden Erfindung ist eine Matratze mit einer erfindungsgemäßen Flächenheizung. Eine derart gestaltete Matratze hat gegenüber dem Stand der Technik, bei dem eine sogenannte Heizdecke mit metallischen Widerstandsheizdrähten den Vorteil, dass die Betriebssicherheit zumindest wesentlich verbessert ist. Es kann mit einer Flächenheizung nach der vorliegenden Erfindung nicht vorkommen, dass ein Brand entsteht. Im Falle einer Beschädigung der Heizschicht, die auch streifenförmig ausgebildet sein kann, entstehen keine Funken, wie bei metallischen Leitern.

Ebenfalls weiter vorne insbesondere im Zusammenhang mit dem ersten Ausführungsbeispiel wurde bereits erläutert, dass die Heizschicht 7 ein Film oder eine Folie ist. Vorzugsweise handelt es sich um eine lackartige Polyurethanschicht oder eine Polyurethan-Lackschicht mit den angegebenen physikalischen Eigenschaften, insbesondere eine Anreicherung mit Kohlenstaub zur Erzielung der elektrischen Leitfähigkeit. Weiterhin ist es bevorzugt, wenn es sich um ein Einkomponenten-Polyurethan-Material handelt und/oder eine Anreicherung mit Kohlenstaub für die elektrische Leitfähigkeit vorgesehen ist.

Eine vorzugsweise Dicke der Heizschicht 7 liegt von ca. 0,3 mm bis etwa 0,5 mm.

Statt dem weiter vorne bereits ausführlicher dargestellten Sprühauftrag des elektrisch leitenden Kunststoffmaterials auf den Träger kann auch beispielsweise ein Walzverfahren eingesetzt werden. Dabei wird flüssiges z.B. Polyurethan auf eine Walze aufgetragen und auf einen Untergrund, wie beispielsweise den Träger oder eine externe Unterlage, abgegeben. Der Abstand der Walzenumfangsfläche vom Untergrund bestimmt die Dicke der Heizschicht. Nach dem Verfestigen oder Aushärten des Polyurethans wird wiederum ein Lackfilm mit den gewünschten Eigenschaften erhalten, wobei Formgebungsmaßnahmen an dem Film, einschließlich Schneiden, beim Walzenauftrag oder danach ausgeführt werden können, wie bereits weiter vorne erläutert wurde.

Wird durch ein geeignetes Verfahren die Heizschicht ggf. auf dem Träger hergestellt, so kann nachfolgend ggf. die Heizschicht alleine oder bereits zusammen mit dem Träger mit einem Träger bzw. z.B. einem Formkörper oder einem Bezug verbunden werden durch Nähen, Kleben, Klettband, etc., worauf ebenfalls bereits weiter vorne eingegangen wurde.

Die Flächenheizung kann mit Gleich- oder Wechselstrom betrieben werden, wobei das Ansprechverhalten bei einem Betrieb mit Gleichstrom besser ist.

Weitere Vorteile der erfindungsgemäßen Flächenheizung liegen neben dem Kostenvorteil gegenüber früheren Systemen mit metallischen Heizdrähten im gleichmäßigen Aufheizverhalten und in der geringeren Stromaufnahme gegenüber beispielsweise bisherigen herkömmlichen Sitzheizungen mit metallischen Heizdrähten, wie eine entsprechende Versuchsreihe zeigt.

Verglichen wurden eine marktübliche Sitzheizung der Firma Bauerhin (Modell S4300) mit einer erfindungsgemäßen Flächenheizung mit einer Heizmatte aus elektrisch leitfähigem Kunststoff. Sitzfläche und Rückenlehne des Sitzes waren jeweils getrennt ansteuerbar. Die Heizmatte wurde über Kopfstützenhülsen oben am Sitz eingehakt und am Rand durch Klebeband befestigt.

Die Messungen sollten Auskunft über das Aufheizverhalten und die Stromaufnahme der beiden Sitzheizungen geben. Ziel des Versuchs war konkret, die Aufheizzeiten mit der zugehörigen Stromaufnahme für beide Bauarten herauszufinden. Dazu wurde an beide Heizungen eine konstante Spannung von 12 V an die Anschlussklemmen angelegt. Die aufgenommene Stromstärke wird über ein in der Spannungsversorgung integriertes Strommessgerät gemessen. In Abständen von 1 min werden die Temperatur und die Stromstärke gemessen. Die Ergebnisse sind in der Tabelle 1 dargestellt. Der Vergleich zwischen den beiden Heizungen wird über die aufgenommenen Werte am Sitz durchgeführt.

**Tabelle 1**

| Heizmatte aus leitendem Kunststoff | | Zeit in min | Heizung S4300 | |
|---|---|---|---|---|
| | | | Firma Bauerhin | |
| Temperatur | Strom | | Temperatur | Strom |
| in °C | in A | | in °C | in A |
| | | | | |
| 21,4 | 7,4 | 0 | 22,4 | 0,0 |
| 26,0 | 7,1 | 1 | 24,1 | 7,8 |
| 30,4 | 6,8 | 2 | 26,9 | 7,7 |
| 36,0 | 6,7 | 3 | 28,8 | 7,7 |
| 37,0 | 6,6 | 4 | 30,3 | 7,6 |
| 7,0 | 6,6 | 5 | 31,1 | 7,6 |
| 39,1 | 6,5 | 6 | 31,3 | 7,6 |
| 40,3 | 6,5 | 7 | 32,5 | 7,6 |
| 41,4 | 6,5 | 8 | 33,0 | 7,6 |
| 42,1 | 6,5 | 9 | 34,0 | 7,6 |
| 42,6 | 6,5 | 10 | 34,4 | 7,9 |
| 43,1 | 6,5 | 11 | 34,7 | 7,6 |
| 43,7 | 6,5 | 12 | 35,0 | 7,7 |
| 44,4 | 6,5 | 13 | 35,4 | 8,0 |
| 44,7 | 6,5 | 14 | 35,8 | 8,0 |
| 45,1 | 6,5 | 15 | 35,6 | 7,6 |
| 46,0 | 6,4 | 25 | 36,0 | 7,6 |
| 48,1 | 6,6 | 50 | 36,1 | 7,7 |

Der Temperaturmesspunkt war bei der Heizmatte der erfindungsgemäßen Flächenheizung mit einer Heizschicht mit elektrisch leitfähigem Kunststoff etwa in der Mitte der Sitzfläche. Bei dem Exemplar nach der herkömmlichen Bauart mit metallischen Heizdrähten lag der Temperaturmesspunkt etwa 0,5 cm neben einem Heizdraht. Die Temperatur auf dem Heizdraht selbst gemessen lag nach 25 min bei 50 °C. Diese Temperatur ist erforderlich, um eine Flächenwirkung zu erzielen. Damit sind in der Praxis jedoch erhebliche Probleme verbunden, indem beispielsweise der Draht durchglühen kann oder sich der Sitzbezug durch zu hohe Temperaturen entzünden kann. Mit der erfindungsgemäßen Flächenheizung sind diese Probleme behoben.

Ein weiterer nicht unerheblicher Nachteil ist bei der herkömmlichen Sitzheizung die u.U. punktuell hohe Temperatur an der Position des männlichen Genitalbereiches, was zu einer Störung der Fertilität führen kann. Die erfindungsgemäße Flächenheizung erzeugt schon grundsätzlich keine Übertemperaturen, da sie die Wärme tatsächlich vollflächig abgeben kann, und kann darüber hinaus an der entsprechenden Stelle ausgespart oder schwächer gestaltet werden.

Weitere Versuche haben ergeben, dass die Aufheizverhalten von Sitz- und Rückenteil etwa gleich sind.

Die Überlegenheit der neuen Flächenheizung nach der Erfindung gegenüber der bisherigen Bauart mit metallischen Leiterdrähten zeigt sich ganz deutlich aus den Versuchsergebnissen. Die Flächenheizung mit der Heizschicht mit elektrisch leitendem Kunststoff heizt schneller auf und verbraucht weniger Strom als die herkömmliche Sitzheizung.

Durch die Erfindung wird somit eine Flächenheizung geschaffen, die vollflächig Wärme abgeben kann, was auch bei einer Bauart mit einer aus einzelnen u.U. beabstandeten Streifen bestehenden Heizschicht besser als beim Stand der Technik gewährleistet werden kann, sich eine Druckbelastung einer Unterlage, wie z.B. eines Sitz-Schaumkörpers reversibel anpasst und zu keinem Feuchtigkeits- oder Luftstau bei Benutzung führt.

Zwar ist die vorliegende Erfindung dem Grunde nach nicht auf das Heizen von Polstergegenständen beschränkt, jedoch sind die Anwendungen der erfindungsgemäßen Flächenheizung als Sitz- oder Matratzenheizung für oder in einen/einem Sitz, insbesondere Fahrzeugsitz, eine/einer Matratze besonders bevorzugt und vorteilhaft, so dass darauf gerichtet ein gesonderter Schutz gerechtfertigt ist. Der Flexibilität der Heizschicht kommt dabei besondere Bedeutung zu.

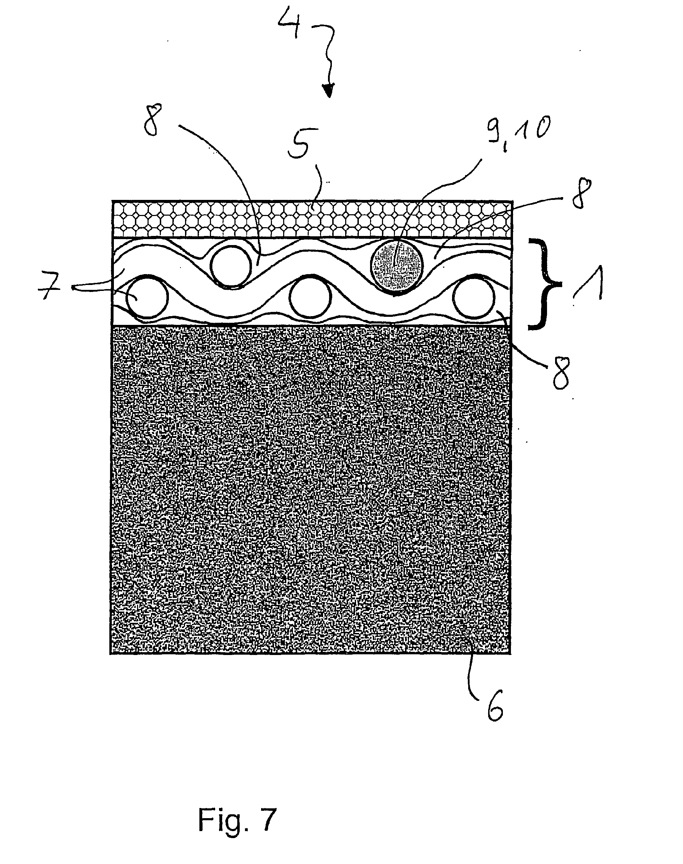

Nachfolgend wird noch eine weitere bevorzugte Ausgestaltung der Erfindung anhand des in der Fig. 7 gezeigten Ausführungsbeispiels unter Bezugnahme auf diese Zeichnung näher erläutert.

Analog zur Fig. 1 ist im Schnitt ein Teil einer Flächenheizung 1 gezeigt, die als Sitzheizung 4 wie in der Fig. 2 eingesetzt werden kann. Diese Flächenheizung 1 enthält als Träger 8 ein Polyester- oder Polyamidgewebe mit beispielsweise eine Maschengröße von ca. 5 mm, d.h., einem Geflecht oder Gitter, bei dem benachbarte quasi parallele Materialstränge einen Abstand von etwa 5 mm haben. Die Struktur des Trägers 8 sowie sein Material ist nicht auf die vorstehenden Angaben beschränkt, sondern können von Fachleuten ohne weiteres entsprechend den insbesondere mechanischen Anforderungen gewählt werden, d.h. auch andere Materialien oder Materialkombinationen sowie Dicken der Materialstränge und andere Maschengrößen sind anwendungsbedingt auswählbar.

Der Träger 8 ist durch Besprühen, Tauchen, Walzen oder anderweitig mit einer Schicht aus elektrisch leitfähigem Kunststoff gemäß der vorliegenden Erfindung, auch wie in den übrigen Unterlagen angegeben, versehen. D.h., dass die Materialstränge des Polyester- oder Polyamidgewebes vollständig mit dem elektrisch leitfähigen Kunststoff umgeben oder ummantelt sind, der somit die Heizschicht 7 bildet.

Als weitere Besonderheit sind in das Polyester- oder Polyamidgewebe, d.h. in den Träger 8, beispielsweise im Abstand von 5 bis 10 cm stromführende Silber- oder Kupferdrähte eingewebt, die in Analogie zum ersten Ausführungsbeispiel gemäß der Fig. 1 die Kontaktenden 9 und 10 von Stromzuleitungsdrähten 11 bzw. 12 bilden. Da durch das Besprühen, Tauchen, Walzen oder anderweitige Aufbringen (mit) der Schicht aus elektrisch leitfähigem Kunststoff gemäß der vorliegenden Erfindung auch die Silber- oder Kupferdrähte, d.h. die Köntaktenden 9 und 10 mit dem elektrisch leitfähigen Kunststoff umgeben oder ummantelt sind, ist für einen optimalen elektrischen Kontakt dazwischen gesorgt. Der Abstand der Silber- oder Kupferdrähte als Kontaktenden 9 und 10 der Stromzuleitungsdrähte 11 bzw. 12 ist nicht auf den angegebenen Wertebereich beschränkt, sondern kann vielmehr von Fachleuten ohne weiteres entsprechend den insbesondere mechanischen und elektrischen Anforderungen gewählt werden, d.h. auch andere Materialien oder Materialkombinationen sowie Dicken der Kontaktenden 9 und 10 und andere Abstände sind anwendungsbedingt auswählbar.

Bevorzugt, aber nicht beschränkend verlaufen die Kontaktenden 9 und 10 in dem Fall, dass es sich bei der Flächenheizung 1 um eine Sitzheizung 4 handelt, insbesondere in einer Richtung etwa 90° zur Fahrtrichtung eines Fahrzeuges (nicht gezeigt). Grundsätzlich können die Kontaktenden 9 und 10 in Form der Silber- oder Kupferdrähte aber in jeglicher Längs- oder Querrichtung verlaufen.

Eine besonders bevorzugte Materialzusammensetzung für die Heizschicht 7, d.h. für den elektrisch leitfähigen Kunststoff ist:
- 300 g Kautschuk, der bei der Herstellung als Granulat, im vorliegenden Fall als feinster Staub, verwendet wird,
- 300 g Tetrahydro-Furan,
- 165 g Graphit, und
- 300 g eines Polyurethans, wie beispielsweise und mit Vorzug 4715 Lupranol der Firma BASF.

Dies ergibt eine Gesamtmenge von 1065 g. Für andere Mengen sind die Anteile entsprechend auszurechnen.

Vorzugsweise Anteile der einzelnen Komponenten der Materialzusammensetzung für die Heizschicht 7, d.h. für den elektrisch leitfähigen Kunststoff sind:
- etwa 20 - 35 %, vorzugsweise ungefähr 25 - 30 %, besonders bevorzugt etwa 28 % eines Kautschuks oder insbesondere mechanisch und/oder elektrisch gleich oder ähnlich wirkenden Materials,
- etwa 20 - 35 %, vorzugsweise ungefähr 25 - 30 %, besonders bevorzugt etwa 28 % Tetrahydro-Furan oder eines insbesondere mechanisch und/oder elektrisch gleich oder ähnlich wirkenden Materials,
- etwa 5 - 25 %, vorzugsweise ungefähr 10 - 20 %, besonders bevorzugt etwa 15 % Graphit oder eines insbesondere mechanisch und/oder elektrisch gleich oder ähnlich wirkenden Materials, und
- etwa 20 - 35 %, vorzugsweise ungefähr 25 - 30 %, besonders bevorzugt etwa 28 % eines Polyurethans, wie beispielsweise und mit Vorzug 4715 Lupranol der Firma BASF, oder eines insbesondere mechanisch und/oder elektrisch gleich oder ähnlich wirkenden Materials.

Eine weitere Ausgestaltungsmöglichkeit der Erfindung wird nachfolgend noch erläutert. Durch Messung der Veränderung der Leistungsaufnahme der Heizschicht 7 kann auf besonders einfache und vorteilhafte weise eine Sitzbelegungserkennung realisiert werden. Diese Sitzbelegungserkennung funktioniert sowohl dazu, um festzustellen, ob überhaupt jemand auf dem Sitz sitzt, als auch dazu, insbesondere das Gewicht des Insassen festzustellen, der auf dem Sitz sitzt. Dieser Aspekt der vorliegenden Erfindung ist einerseits besonders vorteilhaft in Verbindung mit der Flächenheizung, und kann andererseits aber auch getrennt davon als alleinige Sitzbelegungserkennung mit einem Aufbau und Merkmalen analog denen, die für die Flächenheizung in den gesamten vorliegenden Unterlagen offenbart sind, eingesetzt werden.

Gemäß einem weiteren Aspekt der vorliegenden Erfindung betrifft diese eine Sitzbelegungserkennung, einen Sitz damit sowie ein Sitzbelegungserkennungsverfahren jeweils entsprechend den Oberbegriffen der Ansprüche 8, 10 bzw. 11. Dieser Aspekt in seinen einzelnen Ausgestaltungen ist sowohl für sich selbst, als auch in Kombination mit dem ersten Aspekt der Erfindung, d.h. der Flächenheizung, dem Verfahren zu deren Herstellung und dem heizbaren Gegenstand, hierin offenbart.

Der Kern der Sitzbelegungserkennung wird durch Elemente aus elektrisch leitfähigen Kunststoff in einem Sitz geschaffen. Vorzugsweise sind dazu in einem Sitzkissen und insbesondere auch der Rückenlehne sowie vorzugsweise ferner auch in der Kopfstütze Elemente aus elektrisch leitfähigem Kunststoff untergebracht. Mit Vorzug handelt es sich dabei um insbesondere rechtwinkelig zur Fahrtrichtung in vorgegebenen Abständen angeordnete Streifen aus vorzugsweise elektrisch leitfähigem PU.

Besonders bevorzugt ist es, wenn das Material dieser Streifen oder allgemein Elemente 50 - 70 %, insbesondere 55 - 60 %, vorzugsweise ca. 58 % Graphit und 30 - 50 %, insbesondere 40 - 45 %, vorzugsweise ungefähr 42 % PU, enthält. Weiterhin ist es besonders bevorzugt, wenn diese Streifen oder allgemein Elemente flexibel und insbesondere dehnfähig und vorzugsweise dauerhaft reversibel dehnfähig sind.

Diese Elemente oder insbesondere Streifen sind Teil eines Stromkreises. Bei Dehnung der Elemente oder insbesondere Streifen ändert sich deren Querschnitt derart, dass er verringert wird. Eine Querschnittsveränderung führt zu einer Widerstandsänderung in der Form, dass sich bei einer Querschnittsverringerung der elektrisch leitenden Elemente oder insbesondere Streifen deren elektrischer Widerstand verringert, wenn ein elektrischer Strom durch sie hindurchgeleitet wird. Die Änderung des elektrischen Widerstandes kann detektiert und die entsprechende Information zur Sitzbelegungserkennung verwendet werden. Dazu sind vorrichtungsmäßig entsprechende Detektionseinrichtungen und Verarbeitungseinrichtungen vorgesehen, die über geeignete Signalleitungen verbunden sind.

Gemäß einer Weiterbildung erfolgt eine vorerläuterte Querschnittsverringerung der Elemente und insbesondere Streifen aus elektrisch leitfähigem Kunststoff, wie z.B. Pulyurethan, in Abhängigkeit der Belastung, d.h. dem Gewicht einer auf einem entsprechend ausgestatteten Sitz sitzenden Person. Durch die letztere Ausgestaltung kann nicht nur der grundsätzliche Zustand einer Sitzbelegung, sondern auch das Gewicht einer Person zumindest größenordnungsmäßig erfasst werden.

Die belastungsbedingte Querschnittsverringerung der Elemente oder insbesondere Streifen führt zu einer insbesondere belastungsabhängigen Veränderung deren elektrischen Widerstandes. Über diese Veränderung kann einerseits grundsätzlich eine Sitzbelegung erkannt und im speziellen gemäß der erläuterten Weiterbildung das Gewicht einer Person erfasst werden. Die entsprechende Widerstandsänderung wird von einem Sensor oder Detektor ermittelt, dessen Ausgangssignal an Verarbeitungs- und/oder Steuereinrichtungen weitergegeben wird, die in Abhängigkeit von dem Ausgangssignal des Sensors eine Sitzbelegung und u.U. das Gewicht einer Person feststellt und wiederum in Abhängigkeit davon weitere Einrichtungen beispielsweise in einem Kraftfahrzeug steuern, wie z.B. Airbageinrichtungen, Gurtstraffer, Sitz-und/oder Lenkradverstellungen, etc. Gerade bei der Steuerung von Sicherheitseinrichtungen, wie z.B. Airbag, Gurtstraffer und dergleichen, sind die Informationen einer Sitzbelegungserkennung besonders vorteilhaft. Weiterhin ist es dabei von besonderem Vorteil, wenn die Informationen von der Sitzerkennung kombiniert werden beispielsweise mit Sitzpositionsinformationen, da durch die entsprechende Kombination eine optimale Steuerung der Sicherheitseinrichtungen in Abhängigkeit von Größe und Gewicht eines Insassen erfolgen kann. Entsprechend kann beispielsweise das Öffnungsverhalten eines Airbags an die Bedürfnisses des Insassen oder Passagiers angepasst erfolgen.

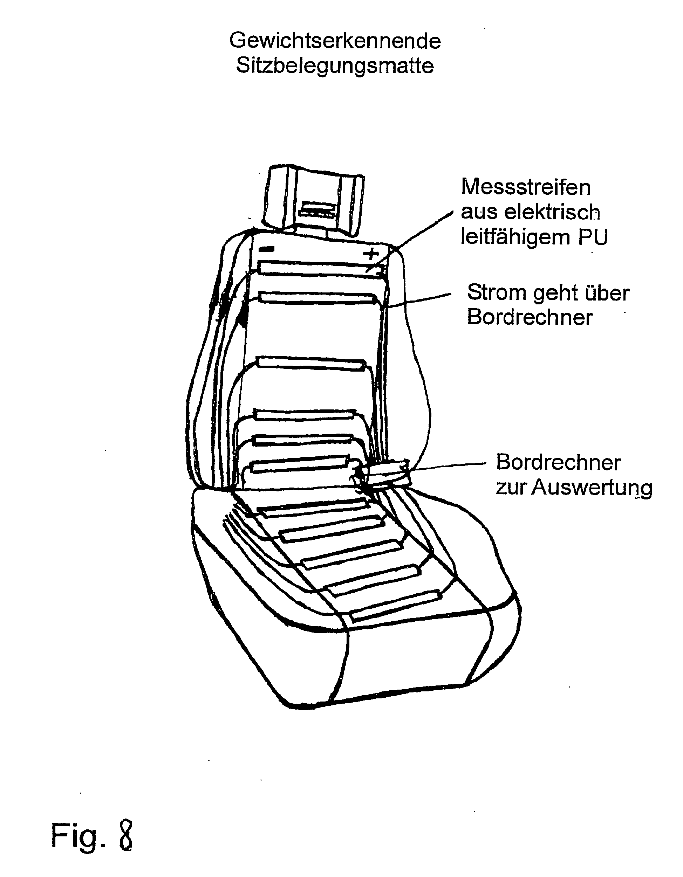

Ein Ausführungsbeispiel einer Sitzbelegungserkennung anhand eines damit ausgestatteten Kraftfahrzeugsitzes ist in Fig. 8 schematisch dargestellt.

Durch den vorstehend beschriebenen Aspekt der vorliegenden Erfindung wird auf besonders einfache und zuverlässige Weise eine Sitzbelegungserkennung, ein Sitz damit sowie ein Sitzbelegungserkennungsverfahren geschaffen. Dabei ist insbesondere die Dehnfähigkeit und Flexibilität des Material von Vorteil, so dass sich die entsprechenden Elemente oder insbesondere Streifen aus elektrische leitfähigen Kunststoff, vorzugsweise Polyurethan (PU) nicht nur einem jeweiligen Insassen grundsätzlich anpassen können, sondern bei Benutzung eines derart ausgestatteten Sitzes dynamisch jegliche Veränderung mitmachen. Insbesondere bedeutet dies, dass damit nicht nur eine Sitzbelegungserkennung technisch realisiert wird, sondern Auflagekraftmesseinrichtungen geschaffen werden, mittels denen zu jedem Zeitpunkt eine Druckbelastung an/auf einem Sitz, beispielsweise eines Fahrzeuges, durch einen Insassen sowie Fahrbedingungen festgestellt werden können. Somit können jederzeit Informationen über die tatsächliche Sitzposition und -haltung eines Insassen, wie z.B. "nach vorne gebeugt", sowie Fahrbelastungssituationen, wie Abbremsen oder Beschleunigen mit der Folge unterschiedlicher Druckbelastungen beispielsweise auf die Rückenlehne des Sitzes, festgestellt und von einer insbesondere zentralen Verarbeitungs- und Steuereinheit (Boardrechner) erfasst und bei der Steuerung anderer Komponenten, wie beispielsweise Sicherheitseinrichtungen, berücksichtigt werden.

Für die Ausführung, Gestaltung und Materialzusammensetzung der Sitzbelegungserkennung gelten ohne Einschränkungen im vollen Umfang die entsprechenden Merkmale der weiter oben beschriebenen Flächenheizung. Insofern wird auf sämtliche Angaben hier vollumfänglich Bezug genommen, um eine bloße wiederholte Wiedergabe im Zusammenhang mit der Sitzbelegungserkennung zu vermeiden.

Die Sitzbelegungserkennung einerseits und die Flächenheizung andererseits sowie beide in Kombination, die besonders vorteilhaft durch dieselben Elemente und damit äußerst kostengünstig hergestellt und realisiert werden kann, kann/können insbesondere aus in den vorliegenden Unterlagen offenbarten Materialzusammensetzungen hergestellt werden. Ein bevorzugtes verfahren ist dabei, dass einer solchen Materialzusammensetzung Lösungsmittel hinzugefügt wird, so dass die erhaltene Rezeptur durch Sprühen, Walzen, Streichen oder anderweitig verarbeitet und insbesondere auf eine Trägerschicht oder Oberfläche aufgetragen werden kann. Bei einem Reaktionsprozess nach dem Auftragen insbesondere durch Temperaturerhöhung kann spätestens erreicht werden, dass sich das Lösungsmittel verflüchtigt. Entsprechende Temperaturen können durch Infrarotbestrahlung, in einem Wärmeofen oder andere geeignete Weise angewandt werden.

Nachfolgend wird für die Heizschicht 7 und/oder die Messstreifen noch eine weitere besonders bevorzugte Materialzusammensetzung angegeben, die mit Vorteil sowohl bei der erfindungsgemäßen Flächenheizung, als auch bei der Sitzbelegungserkennung und schließlich bei einem Sitz mit einer solchen Flächenheizung und/oder mit einer solchen Sitzbelegungserkennung einsetzbar ist und zum Umfang der vorliegenden Erfindung gehört.

Gemäß dieser weiteren Materialzusammensetzung sind die Anteile deren einzelnen Komponenten für die Heizschicht 7, d.h. für den elektrisch leitenden Kunststoff:
- Kautschuk oder insbesondere mechanisch und/oder elektrisch gleich oder ähnlich wirkendes Material je nach Wunsch oder Bedarf, ,
- etwa 30 - 70 %, vorzugsweise ungefähr 50 % Graphit oder eines insbesondere mechanisch und/oder elektrisch gleich oder ähnlich wirkenden Materials, und
- etwa 70 - 30 %, vorzugsweise ungefähr 50 % eines wässerigen Polyurethanbindemittels, wie beispielsweise und mit Vorzug Permutex RU-9012 oder RU-4025 der Firma Stahl Holland bv, Sluisweg 10, NL-5140 AA Waalswijk, Niederlande.

Aus dem Datenblättern der der Firma Stahl Holland bv, Sluisweg 10, NL-5140 AA Waalswijk, Niederlande, ergeben sich folgende Materialdaten:
Permutex RU-9012: 40 % Feststoffe; Typus aromatisches Polyether Polyurethan; 100 % Modulus 0,7 MPa; Reaktivierungstemperatur 50-175 °C; Nasslaminieradhäsiv für allgemeine Anwendungen.
Permutex RU-9012: 35 % Feststoffe; 8,5 % Cosolvent; Typus aliphatisch; 100 % Modulus 1,3 MPa; Elongation 675 %; Erweichungsbereich 135 - 200 °C; gutes Basisbindemittel für alle arten von weichen Oberflächen; zur Verwendung auch als trockenes Adhäsiv zum Laminieren verschiedener Arten von Kunststofffolien, klebt sehr gut auf vorbehandelten Polydefinen.

Versuche mit solchen Materialzusammensetzungen in unterschiedlichen Ausgestaltungen haben für Flächenheizung, Verfahren zu deren Herstellung und heizbaren Gegenstand sowie Sitzbelegungserkennung, Sitz damit und Sitzbelegungserkennungsverfahren hervorragende Ergebnisse insbesondere im Vergleich zu herkömmlichen Pendants geliefert.

Noch eine weitere besonders bevorzugte und vorteilhafte Ausgestaltung der erfindungsgemäßen Flächenheizung und/oder der Sitzbelegungserkennung ist derart, dass die Materialzusammensetzung der Heizschicht 7 bzw. der Messstreifen Kohlefasern enthält oder sogar vollständig daraus besteht. die Heizschicht 7 bzw. die Messstreifen können aus einem Geflecht, Gewirk oder faserigen Vlies aus oder mit solchen Kohlenstoff- oder Carbonfasern bestehen. Es können aber auch erst aus den Kohle- oder Carbonfasern mit oder ohne andere Materialanteile Fäden hergestellt werden, aus denen dann die Heizschicht 7 bzw. die Messstreifen bandartig oder flächig gewebt, gewirkt oder verknäult werden. Mit nur 2 V Stromzufuhr konnte an einem Teststreifen eine äußerst schnelle Erwärmung auf ca. 60 °C erreicht werden.

Die vorliegende Erfindung betrifft somit einerseits eine Flächenheizung, Verfahren zu deren Herstellung und einen heizbaren Gegenstand sowie andererseits eine Sitzbelegungserkennung, einen Sitz damit und Sitzbelegungserkennungsverfahren jeweils einzeln und vorzugsweise in Kombination. Gerade eine Kombination ist von besonderem Vorteil, da für die Realisierung beider Grundaspekte der vorliegende Erfindung dieselben physikalischen Einrichtungen verwendet werden können.

Die vorliegende Erfindung wurde vorstehend anhand von Ausführungsbeispielen näher erläutert, auf die die Erfindung jedoch nicht beschränkt ist. Sämtliche Modifikationen, Kombinationen, Variationen und Substitutionen der vorstehend erläuterten und in den Zeichnungen wiedergegebenen Merkmale sind im Bereich des fachmännischen Wissens von der vorliegenden Erfindung umfasst. Zur Erfindung gehören insbesondere alle Gestaltungsmöglichkeiten, die im Rahmen der zugehörigen Ansprüche liegen. Insbesondere sind auch die aufgezeigten Verwendungen der erfindungsgemäßen Flächenheizung offenbart.

## Patentansprüche

1. Flächenheizung mit einem Träger und einer Heizschicht (7), die elektrisch leitfähigen Kunststoff enthält, wobei die Heizschicht (7) durch einen flexiblen Film gebildet ist und der Träger (8) flexibel ist,
**dadurch gekennzeichnet,**
**dass** die Materialzusammensetzung für die Heizschicht (7), d.h. für den elektrisch leitfähigen Kunststoff enthält:
- etwa 30 - 70 % Graphit, und
- etwa 70 - 30 % eines wässerigen Polyurethanbindemittels, sowie
- ggf. einen Rest, oder
**dass** die Materialzusammensetzung für die Heizschicht (7), d.h. für den elektrisch leitfähigen Kunststoff enthält:
- etwa 20 - 35 %, vorzugsweise ungefähr 25 - 30 %, besonders bevorzugt etwa 28 % eines Kautschuks,
- etwa 20 - 35 %, vorzugsweise ungefähr 25 - 30 %, besonders bevorzugt etwa 28 % Tetrahydro-Furan,
- etwa 5 - 25 %, vorzugsweise ungefähr 10 - 20 %, besonders bevorzugt etwa 15 % Graphit, und
- etwa 20 - 35 %, vorzugsweise ungefähr 25 - 30 %, besonders bevorzugt etwa 28 % eines Polyurethans, wie beispielsweise und mit Vorzug 4715 Lupranol der Firma BASF.

2. Flächenheizung nach Anspruch 1, **dadurch gekennzeichnet,**
**dass** der Träger (8) eine Schicht, insbesondere ein Gewebe oder ein Flies, vorzugsweise ein natürliches oder synthetisches Faservlies ist, und/oder
**dass** die Heizschicht (7) Polyurethan, Einkomonenten-Polyurethan, vernetztes Einkomponenten-Polyurethan, einen PU-Schaum, UV-beständiges und/oder hydrolysefähiges oder dampfdurchlässiges Kunststoffmaterial enthält, und/oder dass der elektrisch leitfähige Kunststoff der Heizschicht Graphit, vorzugsweise in Pulverform enthält, und/oder
**dass** Kontaktenden (9, 10) von Stromzuleitungsdrähten (11, 12) in der Heizschicht (7) oder zwischen dem Träger (8) und der Heizschicht (7) mit letzterer in Kontakt sind,
wobei insbesondere die Kontaktenden (9, 10) der Stromzuleitungsdrähte (11,12) mittels der Heizschicht (7) selbst an letzterer befestigt sind oder die Kontaktenden (9,10) der Stromzuleitungsdrähte (11, 12) mit der Heizschicht (7) und/oder dem Träger (8) vernäht oder verklebt sind, und/oder
**dass** die Heizschicht (7) durch Sprüchen, Walzen oder Streichen auf dem Träger (8) direkt gebildet ist, und/oder
**dass** die Heizschicht (7) mit dem Träger (8) verklebt, vernäht oder verschweißt ist, und/oder
**dass** der Träger (8) ein Formteil (6) aus einem elastischen Material ist, wobei insbesondere das Formteil (6) ein Sitzpolster eines Sitzflächenteils (3) oder einer Rückenlehne (16) oder ein Polster eines Sitz- oder Liegemöbels, insbesondere eine Matratze, ist, und/oder
**dass** eine manuell und/oder elektrisch/elektronisch betätigbare und/oder automatische Stromsteuerung (13) vorgesehen ist, die mit einer Stromquelle (14) verbindbar ist und an die Stromzuleitungsdrähte (11, 12) angeschlossen sind, deren Kontaktenden (9,10) mit der Heizschicht (7) in Kontakt sind, und/oder
**dass** der Träger (8) durch ein Gewebe gebildet ist, das vorzugsweise ein Polyester- oder Polyamidgewebe ist und/oder eine Maschengröße von etwa 5 mm hat, wobei insbesondere Kontaktenden (9 und 10) von Stromzuleitungsdrähten (11 bzw. 12) in das Gewebe eingewebt sind und vorzugsweise einen Abstand von 5 bis 10 cm haben und/oder aus Silber- oder Kupferdrähten gebildet sind, und/oder wobei vorzugsweise der Träger (8) durch Besprühen, Tauchen, Walzen oder anderweitig mit der Heizschicht (7) versehen ist, d.h. mit einer Schicht aus elektrisch leitfähigem Kunststoff, so dass vorzugsweise der Träger (8) und/oder die Kontaktenden (9 und 10) vollständig mit dem elektrisch leitfähigen Kunststoff umgeben oder ummantelt sind.

3. Flächenheizung nach einem der vorhergehenden Ansprüche, **dadurch gekennzeichnet, dass** die Materialzusammensetzung für die Heizschicht (7) Kohlefasern enthält, und/oder dass die Heizschicht (7) Kohlefasern enthält und flexibel ist, und/oder
dass die Heizschicht (7) aus Kohlefasern besteht, und/oder dass aus den Kohlefasern der Heizschicht (7) ein Gewebe, Gewirk oder faseriges Vlies gebildet ist, insbesondere in bandartiger oder flächiger Ausgestaltung, wobei insbesondere aus den Kohlefasern der Heizschicht (7) Fäden gebildet sind, aus denen ein Gewebe, Gewirk oder faseriges Vlies oder ein Netz gebildet ist, insbesondere in bandartiger oder flächiger Ausgestaltung.

4. Heizbarer Gegenstand, **dadurch gekennzeichnet, dass** eine Flächenheizung (1) nach einem der vorhergehenden Ansprüche enthalten ist.

5. Heizbarer Gegenstand nach Anspruch 4, **dadurch gekennzeichnet, dass** der Gegenstand ein Sitzflächenteil (3) oder eine Rückenlehne (16) oder ein Polster eines Sitz- oder Liegemöbels, insbesondere eine Matratze, ist, und dass vorzugsweise die Heizschicht an Oberschenkel-Gesäß-Partien und/oder Rückenpartien eines Nutzers anatomisch angepasst ist, wobei insbesondere die Heizschicht (7) in der Ebene des Sitzflächenteils (3) bzw. der Rückenlehne (16) oder des Polsters eines Sitz- oder Liegemöbels, insbesondere eine Matratze, anatomisch geformt ist, indem sie nur gemäß anatomischen Vorgaben vorhanden oder elektrisch leitfähig ist, und/oder wobei vorzugsweise die Heizschicht (7) zur anatomisch angepassten Wärmeabgabe ein entsprechendes Dickenprofil aufweist, oder
dass der Gegenstand eine gepolsterte Verkleidung (23) insbesondere eines Fahrzeuges (K) ist, wobei insbesondere die Flächenheizung (1) des Gegenstandes zu einer über seine Fläche unterschiedlichen Wärmeabgabe ausgelegt ist, und/oder wobei vorzugsweise die Heizschicht (7) zur über ihre Fläche unterschiedlichen Wärmeabgabe in ihrer flächigen Ausbreitung und/oder in ihrer Dicke profiliert ist.

6. Verfahren zur Herstellung einer Flächenheizung (1) nach einem der Ansprüche 1 bis 3,
wobei eine Heizschicht mit elektrisch leitfähigem Kunststoff mit einem Träger verbunden wird, **dadurch gekennzeichnet,**
**dass** die Heizschicht (7) durch zunächst Auftragen eines elektrisch leitfähigen, insbesondere schäumenden oder Schaum-Kunststoffmaterials auf den Träger (8) und dann Aushärten des Kunststoffmaterials auf dem Träger (8) gebildet wird, oder
**dass** die Heizschicht (7) aus einem elektrisch leitfähigen insbesondere schäumenden oder Schaum-Kunststoffmaterial hergestellt und dann auf dem Träger (8) angeordnet wird, oder
**dass** ein Gewebe als Träger (8) hergestellt wird, dass Kontaktenden (9 und 10) von Stromzuleitungsdrähten (11 bzw. 12) in das Gewebe gleichzeitig oder nachträchlich eingewebt werden, und dass dann eine Heizschicht auf den Träger (8) und die Kontaktenden (9 und 10) aufgebracht wird.

7. Verfahren nach Anspruch 6, **dadurch gekennzeichnet, dass** vor dem Auftragen des elektrisch leitfähigen insbesondere schäumenden oder Schaum-Kunststoffmaterials auf den Träger (8) zunächst Kontaktenden (9, 10) von Stromzuleitungsdrähten (11, 12) auf der Seite des Trägers (8) angeordnet werden, auf der dann das Kunststoffmaterial aufgetragen wird, oder
dass die Heizschicht (7) nach dem Anordnen auf dem Träger (8) mit letzterem verrutschsicher verbunden wird, wobei insbesondere die Heizschicht (7) mit dem Träger (8) vernäht, verklebt oder verschweißt wird, und/oder
dass als Kunststoffmaterial elektrisch leitfähiges Polyurethan verwendet wird, und/oder dass Kontaktenden (9, 10) von Stromzuleitungsdrähten (11, 12) an der Heizschicht (7) und/oder dem Träger (8) angebracht werden, so dass sie in dem Verbund von Träger (8) und Heizschicht (7) mit letzterer in Kontakt sind, wobei insbesondere die Kontaktenden (9, 10) von Stromzuleitungsdrähten (11, 12) mit der Heizschicht (7) und/oder dem Träger (8) vernäht oder verklebt werden, und/oder
dass die Heizschicht (7) bei oder nach ihrer Herstellung in ihrer Flächenform und/oder Dicke profiliert wird.

8. Sitzbelegunserkennung mit Elementen aus elektrisch leitfähigem Kunststoff, nämlich Streifen aus elektrisch leitfähigem Polyurethan,
wobei die Materialzusammensetzung für die Streifen enthält:
- etwa 30 - 70 %, vorzugsweise ungefähr 50 % Graphit, und
- etwa 70 - 30 %, vorzugsweise ungefähr 50 % eines wässerigen Polyurethanbindemittels, sowie
- ggf. einen Rest, wobei insbesondere der Rest Kautschuk enthält, oder
wobei Elemente mit Kohlefasern enthalten sind.

9. Sitzbelegungserkennung nach Anspruch 8, **dadurch gekennzeichnet,**
**dass** Streifen aus elektrisch leitfähigem Polyurethan enthalten sind, und/oder
**dass** der elektrisch leitfähige Kunststoff 50 - 70 %, insbesondere 55 - 60 % und vorzugsweise ca. 58 % Graphit sowie 30 - 50 %, insbesondere 40 - 45 % und vorzugsweise ungefähr 42 % PU enthält, und/oder
**dass** Einrichtungen zur Erkennung und/oder Verarbeitung einer Widerstandänderung in dem elektrisch leitfähigen Kunststoff enthalten sind, und/oder
**dass** die Materialzusammensetzung für die Elemente Kohlefasern enthält, und/oder
**dass** die Elemente streifenartig sind, und/oder dass die Elemente aus Kohlefasern bestehen, und/oder
**dass** aus den Kohlefasern der Elemente bzw. Streifen ein Gewebe, Gewirk oder faseriges Vlies gebildet ist, insbesondere in bandartiger oder flächiger Ausgestaltung, und/oder dass aus den Kohlefasern der Streifen Fäden gebildet sind, aus denen ein Gewebe, Gewirk oder faseriges Vlies oder ein Netz gebildet ist, insbesondere in bandartiger oder flächiger Ausgestaltung.

10. Sitz mit einer Sitzbelegungserkennung, **dadurch gekennzeichnet, dass** die Sitzbelegungserkennung nach einem der Ansprüche 8 bis 9 ausgestaltet ist.

11. Sitzbelegungserkennungsverfahren mit einer Sitzbelegungserkennung nach einem der Ansprüche 8 bis 9, **dadurch gekennzeichnet, dass** eine Widerstandsänderung in einem elektrisch leitfähigen Kunststoffmaterial in Folge einer Gewichtsbelastung des Materials erfasst wird.

## Claims

1. A panel heating system with a carrier and a heating layer (7), which comprises electrically conductive plastic, wherein the heating layer (7) is formed by a flexible film and the carrier (8) is flexible,
**characterized**
**in that** the material composition for the heating layer (7), this means for the electrically conductive plastic, comprises the following:
- approximately 30 - 70% graphite;
- approximately 30 - 70% of an aqueous polyurethane binder; and
- possibly a balance, or
**in that** the material composition for the heating layer (7), this means, for the electrically conductive plastic, comprises the following:
- approximately 20 - 35 %, preferably approximately 25 - 30%, particularly preferably approximately 28% of a rubber;
- approximately 20 - 35 %, preferably approximately 25 - 30%, particularly preferably approximately 28% tetrahydrofuran;
- approximately 5 - 25 %, preferably approximately 10 - 20%, particularly preferably approximately 15% graphite; and
- approximately 20 - 35 %, preferably approximately 25 - 30%, particularly preferably approximately 28% of a polyurethane, like e.g. and preferably 4715 Lupranol of the BASF company.

2. A panel heating system according to claim 1,
**characterized**
**in that** the carrier (8) is a layer, in particular a cloth or fleece, preferably a natural or synthetic fiber fleece, and/or
**in that** the heating layer (7) comprises polyurethane, one component polyurethane, linked one component polyurethane, a PU-foam, UV-resistant, and/or hydrolysis capable or vapor permeable plastic material, and/or the electrically conductive plastic of the heating layer comprises graphite, preferably in the form of powder, and/or
**in that** contact terminals (9, 10) of power supply wires (11, 12) in the heating layer (7) or between the carrier (8) and the heating layer (7) are in contact with the latter, wherein in particular, the contact terminals (9, 10) of the power supply wires (11, 12) are mounted by the heating layer (7) itself to the latter, or the contact terminals (9, 10) of the power supply wires (11, 12) are sewed or glued to the heating layer (7) and/or to the carrier (8), and/or
**in that** the heating layer (7) is formed directly on the carrier (8) by spraying, rolling or brushing, and/or
**in that** the heating layer (7) is glued, sewed or welded to the carrier (8), and/or
**in that** the carrier (8) is a formed component (6) made of an elastic material,
wherein the formed component (6) is in particular a seat cushion of a sitting surface component (3) or of a backrest (16), or a cushion of a piece of sitting or lying furniture, in particular a mattress, and/or
**in that** a manually and/or electrically/electronically actuatable and/or automatic power control (13) is provided, which can be connected to a power source (14), and to which power supply wires (11, 12) are connected, whose contact terminals (9, 10) are in contact with the heating layer (7), and/or
**in that** the carrier (8) is formed by a fabric, which is preferably a polyester or polyamide fabric, and/or which has a mesh size of approximately 5 mm,
wherein in particular contact terminals (9 and 10) of power supply wires (11 or 12) are woven into said fabric and preferably have a distance of 5 to 15 cm, and/or are formed from silver or copper wires, and/or wherein preferably, the carrier (8) is provided with the heating layer (7) by spraying, dipping, rolling or through other methods, this means with a layer made of electrically conductive plastic, so that preferably the carrier (8) and/or the contact terminals (9, 10) are completely surrounded or encased by the electrically conductive plastic.

3. A heating panel according to one of the preceding claims,
**characterized**
**in that** the material composition for the heating layer (7) comprises carbon fibers, and/or in that the heating layer (7) comprises carbon fibers and is flexible, and/or
**in that** the heating layer (7) consists of carbon fibers, and/or a cloth, knitted material or fibrous fleece is formed from the carbon fibers of the heating layer (7), in particular in a band shaped or flat configuration, wherein threads are formed in particular from the carbon fibers of the heating layer (7), from which a cloth, knitted material or fibrous fleece or net is formed, in particular in a band shaped or flat configuration.

4. A heatable object, **characterized in that** a heating panel (1) according to one of the preceding claims is comprised.

5. A heatable object according to claim 4,
**characterized**
**in that** the object is a sitting surface component (3) or a backrest (16) or a cushion of a piece of sitting or lying furniture, in particular a mattress, and in that the heating layer is preferably anatomically adapted to the thigh and fundament portions, and/or back portions of a user, wherein in particular, the heating layer (7) in the plane of the seat surface component (3) or of the backrest (16) or of the cushion of a piece of sitting or lying furniture, in particular, of a mattress, is anatomically shaped, in that it is provided or electrically conductive only according to anatomical specifications, and/or
wherein the heating layer (7) preferably comprises a respective thickness profile for anatomically adapted heat transfer, or
**in that** the object is a cushioned lining (23), in particular of a vehicle (K),
wherein in particular the heating panel (1) of the object is configured for a heat transfer, which varies over surface of the panel, and/or wherein preferably, the heating layer (7) is profiled with respect to its surface extension and/or with respect to its thickness for a varied heat transfer over its surface.

6. A method for producing a heating panel (1) according to one of the claims 1 through 3, wherein a heating layer with electrically conductive plastic is connected to a carrier,
**characterized**
**in that** the heating layer (7) is formed by initially applying an electrically conductive, in particular foaming or foam-plastic material to the carrier (8), and by subsequent hardening of the plastic material on the carrier (8), or
**in that** the heating layer (7) is made of a electrically conductive, in particular, foaming or foam-plastic material, and then disposed on the carrier (8), or
**in that** a cloth is produced as a carrier (8), contact terminals (9 and 10) of power supply wires (11 or 12) are simultaneously or subsequently woven into the cloth, and a heating layer is applied to the carrier (8) and to the contact terminals (9 and 10).

7. A method according to claim 6, **characterized**
**in that** before applying the electrically conductive, in particular foaming or foam-plastic material to the carrier (8), initially terminals (9, 10) of the power supply wires (11, 12) are disposed on the side of the carrier (8), where the plastic material is then applied, or
**in that** the heating layer (7) is connected slip proof to the carrier (8) after being disposed thereon, wherein in particular the heating layer (7) is sewn, glued or welded to the carrier (8), and/or
**in that** electrically conductive polyurethane is used as a plastic material, and/or contact terminals (9, 10) of power supply wires (11, 12) are mounted to the heating layer (7) and/or to the carrier (8), so that they are in contact with the heating layer (7) in the combination of the carrier (8) and the heating layer (7), wherein in particular, the contact terminals (9, 10) of power supply wires (11, 12) are sewed or glued together with the heating layer (7) and/or the carrier (8), and/or
**in that** the heating layer (7) is profiled with respect to its surface shape and/or with respect to its thickness during or after its production.

8. A seat occupancy recognition system with elements made of electrically conductive plastic, namely strips made of electrically conductive polyurethane,
wherein the material composition of the strips comprises the following:
- 30 - 70%, preferably approximately 50% graphite;
- 30 70%, preferably 50% of an aqueous polyurethane binder; and
- possibly a residual, or
wherein elements with carbon fibers are comprised.

9. A seat occupancy recognition system according to claim 8, **characterized**
**in that** strips made of electrically conductive polyurethane are included, and/or the electrically conductive plastic includes 50 - 70%, in particular 55 - 60%, and preferably approximately 58% graphite, and 30 50%, in particular 40 - 45%, and preferably approximately 42% PU, and/or
**in that** means for detecting and/or processing a resistance change in the electrically conductive plastic are included, and/or
**in that** the material composition for the elements includes carbon fibers, and/or
**in that** the elements are strip shaped, and/or in that the elements are comprised of carbon fibers, and/or
**in that** a cloth, knitted material or fibrous fleece is formed from the carbon fibers of the elements or strips, in particular in a band shaped or flat configuration, and/or
**in that** threads are formed from the carbon fibers of the strips, from which a cloth, knitted material or fibrous fleece or a net is formed, in particular, in a band shaped or flat configuration.

10. A seat with a seat occupancy recognition system, **characterized in that** the seat occupancy recognition system is configured according to one of the claims 8 through 9.

11. A seat occupancy recognition method with a seat occupancy recognition system according to one of the claims 8 through 9, **characterized in that** a resistance change is detected in an electrically conductive plastic material as a consequence of a weight loading of the material.

## Revendications

1. Chauffage surfacique comprenant un support et une couche chauffante (7) qui contient une matière plastique électriquement conductrice, ladite couche chauffante (7) étant formée par un film flexible et le support (8) étant flexible,
**caractérisé en ce que**
la composition des matières pour la couche chauffante (7), c'est-à-dire pour la matière plastique électriquement conductrice, contient :
- environ 30 à 70 % de graphite, et
- environ 70 à 30 % d'un liant polyuréthane aqueux, et
- le cas échéant un reste,
ou **en ce que** la composition des matières pour la couche chauffante (7), c'est-à-dire pour la matière plastique électriquement conductrice contient :
- environ 20 à 35 %, de préférence environ 25 à 30 %, de manière particulièrement préférée environ 28 % d'un caoutchouc,
- environ 20 à 35 %, de préférence environ 25 à 30 %, de manière particulièrement préférée environ 28 % de tétrahydrofurane,
- environ 5 à 25 %, de préférence environ 10 à 20 %, de manière particulièrement préférée environ 15 % de graphite, et
- environ 20 à 35 %, de préférence environ 25 à 30 %, de manière particulièrement préférée environ 28 % d'un polyuréthane, comme par exemple et avantageusement du Lupranol 4715 de la société BASF.

2. Chauffage surfacique selon la revendication 1,
**caractérisé en ce que**
le support (8) est une couche, en particulier un textile ou une nappe, de préférence une nappe de fibres naturelles ou synthétiques, et/ou
**en ce que** la couche chauffante (7) contient du polyuréthane, du polyuréthane monocomposant, du polyuréthane monocomposant réticulé, une mousse de polyuréthane, une matière plastique stable aux rayons UV et/ou capable d'être hydrolysée ou perméable à la vapeur, et/ou **en ce que** la matière plastique électriquement conductrice de la couche chauffante contient du graphite, de préférence sous forme de poudre, et/ou
**en ce que** des extrémités de contact (9, 10) de fils d'amenée électriques (11, 12) dans la couche chauffante (7) ou entre le support (8) et la couche chauffante (7) sont en contact avec cette dernière,
dans lequel en particulier les extrémités de contact (9, 10) des fils d'amenée électriques (11, 12) sont fixées au moyen de la couche chauffante (7) elle-même à cette dernière, ou bien les extrémités de contact (9, 10) des fils d'amenée électriques (11, 12) sont cousues ou collées avec la couche chauffante (7) et/ou le support (8), et/ou
**en ce que** la couche chauffante (7) est formée par pulvérisation, laminage ou étalement sur le support (8) directement, et/ou
**en ce que** le support (8) est une pièce moulée (6) en un matériau élastique, ladite pièce moulée (6) étant en particulier un rembourrage d'une partie surfacique de siège (3) ou d'un dossier (16), ou un rembourrage d'un meuble d'assise ou de couchage, en particulier un matelas, et/ou
**en ce qu'**il est prévu une commande électrique (13) manuelle et/ou à actionnement électrique/électronique et/ou automatique, laquelle est susceptible d'être reliée à une source de courant (14) et à laquelle sont raccordés les fils d'amenée de courant (11, 12), dont les extrémités de contact (9, 10) sont en contact avec la couche chauffante (7), et/ou
**en ce que** le support (8) est formé par un textile qui est de préférence un textile en polyester ou en polyamide et/ou présente une taille de mailles d'environ 5 mm, et dans lequel des extrémités de contact (9 et 10) de fils d'amenée de courant (11 ; 12) sont en particulier tissées dans le textile et présentent de préférence une distance de 5 à 10 cm et/ou sont formées par des fils d'argent ou de cuivre, et/ou dans lequel le support (8) est pourvu de la couche chauffante (7) par pulvérisation, par immersion, par laminage ou d'une autre manière, c'est-à-dire d'une couche de matière plastique électriquement conductrice, de sorte que le support (8) et/ou les extrémités de contact (9 et 10) sont en particulier totalement entouré(e)s ou enveloppé(e)s avec la matière plastique électriquement conductrice.

3. Chauffage surfacique selon l'une des revendications précédentes, **caractérisé en ce que** la composition des matières pour la couche chauffante (7) contient des fibres de carbone, et/ou **en ce que** la couche chauffante (7) contient des fibres de carbone et est flexible, et/ou **en ce que** la couche chauffante (7) est constituée par des fibres de carbone, et/ou **en ce qu'**à partir des fibres de carbone de la couche chauffante (7) est formé un textile, un tricot ou une nappe fibreuse, en particulier dans une réalisation analogue à une bande ou à un matériau surfacique, et en particulier à partir des fibres de carbone de la couche chauffante (7) sont formés des filaments à partir desquels est formé un textile, un tricot ou une nappe fibreuse ou un filet, en particulier dans une réalisation analogue à une bande ou à un matériau surfacique.

4. Article susceptible d'être chauffé, **caractérisé en ce qu'**il contient un chauffage surfacique (1) selon l'une des revendications précédentes.

5. Article susceptible d'être chauffé, selon la revendication 4,
**caractérisé en ce que**
l'article est une partie surfacique formant siège (3) ou un dossier (16)
ou un rembourrage d'un meuble d'assise ou de couchage, en particulier un matelas, et **en ce que** la couche chauffante est en particulier adaptée aux parties correspondant aux cuisses et aux fesses et/ou aux parties dorsales d'un utilisateur sur le plan anatomique, et en particulier la couche chauffante (7) est formée de façon anatomique dans le plan de la partie surfacique formant siège (3) ou respectivement du dossier (16)
ou du rembourrage d'un meuble de siège ou d'assise, en particulier un matelas, en prévoyant sa présence ou sa conductibilité électrique uniquement suivant des définitions anatomiques, et/ou dans lequel la couche chauffante (7) destinée à une dissipation thermique adaptée sur le plan anatomique présente un profil correspondant en profondeur, ou
**en ce que** l'article est un habillage rembourré (23) en particulier d'un véhicule (K), dans lequel en particulier le chauffage surfacique (1) de l'article est conçu pour une dissipation thermique différente sur sa surface, et/ou dans lequel en particulier la couche chauffante (7) est profilée quant à son extension surfacique et/ou quant à son épaisseur en vue d'une dissipation thermique différente sur sa surface.

6. Procédé pour la réalisation d'un chauffage surfacique (1) selon l'une des revendications 1 à 3, dans lequel une couche chauffante avec une matière plastique électriquement conductrice est reliée à un support,
**caractérisé en ce que**
la couche chauffante (7) est formée tout d'abord par application d'une matière plastique électriquement conductrice, en particulier capable de mousser ou sous forme de mousse, sur le support (8) et ensuite par durcissement de la matière plastique sur le support (8), ou bien **en ce que** la couche chauffante (7) est réalisée en une matière plastique électriquement conductrice, en particulier capable de mousser ou sous forme de mousse, puis agencée sur le support (8), ou bien **en ce que** l'on réalise un textile à titre de support (8), **en ce que** des extrémités de contact (9 et 10) de fils d'amenée électriques (11 ; 12) sont tissées simultanément ou ultérieurement dans le textile, et **en ce qu'**une couche chauffante est alors appliquée sur le support (8) et sur les extrémités de contact (9 et 10).

7. Procédé selon la revendication 6, **caractérisé en ce que**
avant l'application de la matière plastique électriquement conductrice, en particulier capable de mousser ou sous forme de mousse, sur le support (8), on dispose tout d'abord des extrémités de contact (9, 10) de fils d'amenée électriques (11, 12) sur le côté du support (8) sur lequel on applique alors la matière plastique, ou bien
**en ce que** la couche chauffante (7) est reliée, après avoir été agencée sur le support (8) à ce dernier de manière assurée pour empêcher son ripage, en prévoyant en particulier que la couche chauffante (7) soit cousue, collée ou soudée avec le support (8), et/ou
**en ce que** l'on utilise comme matière plastique du polyuréthane électriquement conducteur, et/ou **en ce que** des extrémités de contact (9, 10) de fils d'amenée électriques (11, 12) sont appliquées sur la couche chauffante (7) et/ou sur le support (8), de sorte que, dans le composite formé du support (8) et de la couche chauffante (7), elles se trouvent en contact avec cette dernière, et en particulier les extrémités de contact (9, 10) de fils d'amenée électriques (11, 12) sont cousues ou collées avec la couche chauffante (7) et/ou le support (8), et/ou
**en ce que** la couche chauffante (7) est profilée lors de sa, réalisation ou postérieurement à celle-ci, quant à sa forma surfacique et/ou quant à son épaisseur.

8. Dispositif de reconnaissance d'occupation d'un siège comprenant des éléments en matière plastique électriquement conductrice, à savoir des rubans de polyuréthane électriquement conducteur,
dans lequel la composition des matières pour les rubans contient :
- environ 30 à 70 %, de préférence environ 50 % de graphite, et
- environ 70 à 30 %, de préférence environ 50 % d'un liant polyuréthane aqueux, ainsi que
- le cas échéant un reste, ledit reste contenant en particulier du caoutchouc, ou dans lequel sont contenus des éléments avec des fibres de carbone.

9. Dispositif de reconnaissance d'occupation d'un siège selon la revendication 8, **caractérisé en ce que**
il contient des rubans de polyuréthane électriquement conducteur, et/ou en ce que la matière plastique électriquement conductrice contient 50 à 70 %, en particulier 55 à 60 %, et de préférence environ 58 % de graphite, ainsi que 30 à 50 %, en particulier 40 à 45 % et de préférence environ 48 % de polyuréthane, et/ou
**en ce qu'**il contient des moyens pour la reconnaissance et/ou le traitement d'une variation de résistance dans la matière plastique électriquement conductrice, et/ou
**en ce que** la composition des matériaux pour les éléments contient des fibres de carbone, et/ou
**en ce que** les éléments sont semblables à des rubans, et/ou **en ce que** les éléments sont en fibre de carbone, et/ou
à partir des fibres de carbone des éléments est formé un textile, un tricot ou une nappe fibreuse, en particulier dans une réalisation semblable à une bande ou une réalisation surfacique, et/ou **en ce que** à partir des fibres de carbone des rubans sont formées des filaments à partir desquels est formé un textile, un tricot, une nappe fibreuse ou un filet, en particulier dans une réalisation semblable à une bande ou une réalisation surfacique.

10. Siège comprenant un dispositif de reconnaissance d'occupation du siège, **caractérisé en ce que** le dispositif de reconnaissance d'occupation du siège est réalisé selon l'une des revendications 8 à 9.

11. Procédé de reconnaissance de l'occupation d'un siège avec un dispositif de reconnaissance d'occupation de siège selon l'une des revendications 8 à 9, **caractérisé en ce que** l'on constate une modification de la résistance dans une matière plastique électriquement conductrice à la suite d'un chargement du matériau par un poids.
